# EUROPEAN PATENT SPECIFICATION

(11) **EP 2 969 138 B1**
(45) Date of publication and mention of the grant of the patent: **22.11.2017**
(21) Application number: 14765602.9
(22) Date of filing: 14.03.2014
(51) Int. Cl.: B01D 53/83, B01D 53/86, B01J 8/04, B01D 53/88, C05C 5/00, C05D 9/00, F23J 15/02

(54) **CLEANING STACK GAS**
RAUCHGASREINIGUNG
COMBUSTION DE CHARBON PROPRE

(30) Priority: 15.03.2013 US 201313841339
(43) Date of publication of application: 20.01.2016
(73) Proprietor: 3D Clean Coal Emissions Stack, LLC, Powell, Ohio 43065 (US)
(72) Inventor: DAVIDSON, James Gary, Buchanan, Tennessee 38222 (US)
(74) Representative: Grünecker Patent- und Rechtsanwälte PartG mbB
(86) International application number: PCT/US2014/029570
(87) International publication number: WO 2014/144954

(56) References cited:
- WO-A1-92/19365
- WO-A1-03/002912
- US-A- 4 046 888
- US-A- 5 906 675
- US-A- 5 906 743
- US-A1- 2009 151 250
- US-B1- 7 399 458
- US-B2- 7 776 293
- US-B2- 7 776 298

## Description

### RELATED APPLICATIONS

This application is an international application of U.S. Patent Application No. 13/841,339, filed March 15, 2013.

### BACKGROUND AND SUMMARY

This invention relates to cleaning of stack gases such as those from coal fired power plants, from natural or propane burning heating plants, or from cement kilns. The stack gases exhausted from each such facility is controlled by environmental regulations. Such regulations require abatement of carbon monoxide (CO), carbon dioxide (CO₂), nitrogen oxide (NOx), sulfur oxide (SOx), as well as halogens, such as chloride and fluorides, and trace metals particularly, mercury, lead, and zinc.

Various methods and apparatus have been proposed for abating these pollutants in stack gases. In particular, a variety of methods have been proposed for reducing pollutants released from coal-fired stack gas. One method of cleaning coal-fired stack gas is the use of scrubbers which inject a liquid or slurry into a gas stream that washes various pollutants, such as with acidic compounds, from the stack gas stream. Another type of cleaning is the use of an exhaust burner that combusts volatile materials and other combustible compounds, reducing pollution in the stack gas.

Specifically, it has been proposed that the stack gases be mixed with ammonia or urea and then passed through a catalyst in which the ammonia reacts selectively with the nitrous oxides to form nitrogen gas in water vapor, or combustion of a sulfur-containing fossil fuel in the presence of a calcium carbonate or magnesium carbonate to form calcium sulfate or magnesium sulfate. *See* U.S. Patent Nos. 8,181,451; 6,706,246; 5,525,317; 5,237,939; 4,185,080; and 4,051,225. It has also been proposed to reduce nitrogen in stack gas by passing the stack gas through a heat exchange having a SCR catalyst. *See* U.S. Patent No. 5,918,555. Reduction of sulfur oxide content in stack gases has been proposed involving catalyzed oxidation to sulfur trioxide in the presence of an absorbent or combusting sulfur-containing fuel in a combustion zone charged with a slurry in sulfuric acid solution. *See* U.S. Patent Nos. 5,540,755; 4,649,034; 4,284,015; and 4,185,080. Catalytically converting unburned hydrocarbons and carbon monoxide to carbon dioxide and reducing nitrogen oxides to nitrogen subsequent to the combustion of fossil fuels while absorbing sulfur oxide has been proposed, where the catalytic material is physically combined onto a dry powder of an adsorbent matrix select from calcium aluminate, calcium aluminate cement, barium titanate, and calcium titanate. *See* U.S. Patent No. 4,483,259. It has also been proposed to pass the stack gases through a catalyst bed of a combination of active metals on the surface that is capable of reducing or converting sulfur oxides, carbon monoxide and hydrocarbons to inert compounds such as carbon dioxide, water and nitrogen. *See* U.S. Patent No. 7,399,458. Levels of mercury in stack gases from coal combustion have also been reduced by introducing a sorbent composition into the gas stream in a zone where temperature is greater than 500 °C and where the sorbent composition comprises an effective amount of nitrate salt and/or a nitrite salt. *See* U.S. Patent Nos. 7,468,170 and 7,731,781.

Other types of cleaning stack gas have also been proposed and will be known to those having skill in the art. These previous proposals have a number of drawbacks. Many require addition of another gas or liquid such as ammonia sulfuric acid, or the presence of an active metal catalyst.

One particular problem unresolved by current technology is carbon gaseous pollutants that cannot be reduced by scrubbing, combustion, or capture. It has been proposed to capture the carbon in the form of carbon dioxide, compress the carbon dioxide, and storing it in a geological formation. Zeolite has been proposed among others materials to absorb carbon dioxide, and after sequestering the carbon dioxide, then regenerating the zeolite material. *See "*carbon Dioxide Capture Using a Zeolite Molecular Sieve Sampling System for Isotopic Studies (13C and 14C) of Respiration", Radiocarbon, 47, 441-451 (2005); *"*Absorbent Materials for Carbon Dioxide Capture from Large Anthropogenic Point Sources", ChemSusChem 2009, 2, 796-854*; "*NIST Provides Octagonal Window of Opportunity for Carbon Capture", NIST Techbeat, February. 7, 2012. However, these methods involve the use of large particle sizes of zeolite; for example, between 1/16 and 1/8 inch in size under conditions to provide for adsorption of carbon dioxide and later regeneration. As such, these methods of absorbing carbon dioxide highlight the continuing problem of disposing of the sequestered carbon dioxide.

There is therefore still a need for a method and apparatus to effectively remove carbon monoxide, carbon dioxide, nitrous oxides, sulfur oxides and trace metals, such as mercury, from stack gases without consuming expensive catalysts, without injecting additional gases, liquids and/or solids into the stack gas, and without creating waste products that, themselves, present additional problems and cost in disposal. This is of particular concern in cleaning of stack gases coal from fire power plants because of the release of volatiles such as coal tar and other active pollutants along with carbon dioxide in the stack gas.

Presently disclosed is a method of cleaning stack gases comprising the steps of:
(a) providing in a stack adapted to pass stack gases through a first catalytic flow-through bed of calcium zeolite comprising natural zeolite particles of a majority between 44 µm and 64 µm in size at a temperature above the dew point between 125 and 500 °F and a pressure between 3 and 200 psi adapted to reduce carbon oxides in the stack gases;
(b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles of a majority between 65 µm and 125 µm in size at a temperature above the dew point between 125 and 500 °F and a pressure between 3 and 200 psi adapted to reduce nitrogen oxides in the stack gases;
(c) providing in the stack adapted to pass stack gases positioned adjacent the second catalytic flow-through bed, a third catalytic flow-through bed of calcium zeolite comprising natural zeolite particles of a majority between 78 µm and 204 µm at a temperature above the dew point between 125 and 500 °F and a pressure between 3 and 200 psi adapted to reduce sulfur oxides in the stack gases; and
(d) passing stack gases selected from the group consisting of volatiles from combustion of coal or from combustion of natural gas or from a cement kiln sequential through the first catalytic bed, the second catalytic bed, and the third catalytic bed each collecting materials in the catalytic beds and providing gas exiting the third catalytic bed with at least 70% reduction in sulfur oxides, nitrogen oxides and carbon oxide.

The method where the stack gas is sequentially circulated through the first catalytic bed, the second catalytic bed, and the third catalytic bed may also involve removal from the stack gas of at least 50% or 70% of mercury in all forms.

Also presently disclosed is a method of cleaning stack gases comprising the steps of:
(a) providing in a stack adapted to pass stack gases through a first catalytic flow-through bed of calcium zeolite comprising natural zeolite particles of a majority between 44 µm and 64 µm in size at a temperature above the dew point between 125 and 500 °F and a pressure between 3 and 200 psi adapted to reduce carbon oxides in the stack gases;
(b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles of a majority between 65 µm and 125 µm in size at a temperature above the dew point between 125 and 500 °F and a pressure between 3 and 200 psi adapted to reduce nitrogen oxides in the stack gases;
(c) providing in the stack adapted to pass stack gases positioned adjacent the second catalytic flow-through bed, a third catalytic flow-through bed of calcium zeolite comprising natural zeolite particles of a majority between 78 µm and 204 µm at a temperature above the dew point between 125 and 500 °F and a pressure between 3 and 200 psi adapted to reduce sulfur oxides in the stack gases;
(d) passing stack gases selected from the group consisting of volatiles from combustion of coal or from combustion of natural gas or from a cement kiln sequential through the first catalytic bed, the second catalytic bed, and the third catalytic bed each collecting materials in the catalytic beds and providing gas exiting the third catalytic bed with at least 70% reduction in sulfur oxides, nitrogen oxides and carbon oxide; and
(e) purging solids and liquids from the first catalytic bed, the second catalytic bed, and the third catalytic bed by intermittently passing nitrogen through the beds to remove solids and liquids collected from the stack gases by the beds.

Again, the method where the stack gas is sequentially circulated through the first catalytic bed, the second catalytic bed, and the third catalytic bed may also involve removal from the stack gas of at least 50% or 70% of mercury in all forms.

In any case, the method may also comprise in addition a fourth catalytic flow-through bed of calcium zeolite comprising natural zeolite particles between 44 µm and 64 µm in size positioned in the stack before the first catalytic bed with an electrical charge on said fourth catalytic flow-through bed. This bed is to separately collect bauxite compounds from the stack gases before passing through the first catalytic bed.

In any event, the method may also involve the gases exiting a stack from the third catalytic bed, whether or not a fourth catalytic flow-through bed is used, with at least 90% or 95% reduction in bauxite compounds, sulfur oxides, nitrogen oxides, mercury oxide, and carbon oxide compared to the stack gases delivered through the stack.

In any event, the method may involve where the stack gas is circulated through the first catalytic bed, the second catalytic bed, and the third catalytic bed, each positioned between screens of between 150 and 250 mesh. In addition or alternatively, the first catalytic bed, the second catalytic bed, and the third catalytic bed may each be provided on a moving disk. The method may alternatively involve at least two series of sequential circulations through the first catalytic bed, the second catalytic bed, and the third catalytic bed provided in parallel so that the stack gases can be cleaned by the method through one series of beds while other series of the beds can be cleaned as described below.

The method may alternatively be practiced separately to reduce carbon monoxide and dioxide, sulfur oxides and/or nitrogen dioxides as described in the claims set forth at the end of this application. This is particularly the case with stack gas from cement kilns and other plants, which tend to focus on carbon dioxide.

Also disclosed is an alternative method of cleaning stack gases comprising the steps of:
(a) providing in a stack adapted to pass stack gases of less than 7% oxygen through a first catalytic flow-through bed of calcium zeolite comprising natural zeolite particles at a temperature above the dew point between 125 and 500 °F and a pressure between 3 and 200 psi adapted to reduce carbon oxides from the stack gases and increase oxygen levels in the stack gas;
(b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles at a temperature above the dew point between 125 and 500 °F and a pressure between 3 and 200 psi adapted to reduce nitrogen oxides from the stack gases and increase oxygen levels in the stack gas;
(c) providing in the stack adapted to pass stack gases positioned adjacent the second catalytic flow-through bed, a third catalytic flow-through bed of calcium zeolite comprising natural zeolite particles at a temperature above the dew point between 125 and 500 °F and a pressure between 3 and 200 psi adapted to reduce sulfur oxides in the stack gases and increase oxygen levels in the stack gas; and
(d) passing stack gases of less than 7% oxygen selected from the group consisting of volatiles from combustion of coal or from combustion of natural gas or from a cement kiln sequential through the first catalytic bed, the second catalytic bed, and the third catalytic bed each collecting materials catalytic beds and providing gas exiting the third catalytic bed with at least 70% reduction in sulfur oxides, nitrogen oxides and carbon oxide and greater than 15 % oxygen.

In this alternative method, the beds providing the first catalytic bed, the second catalytic bed, and the third catalytic bed may also involve the removal from the stack gas of at least 50% or 70% of mercury. The oxygen exiting the third catalytic bed may be recirculated through the burners to provide fuel for the combustible system.

In any case, the alternative method may also comprise in addition a fourth catalytic flow- through bed of calcium zeolite comprising natural zeolite particles between 44 µm and 64 µm in size positioned in the stack before the first catalytic bed with an electrical charge on said fourth catalytic flow-through bed to collect bauxite compounds from the stack gases before passing through the first catalytic bed.

In any event, the alternative method may also involve the gases exiting a stack from the third catalytic bed, whether or not a fourth catalytic flow is used, providing at least 90% or 95% reduction in bauxite compounds, sulfur oxides, nitrogen oxides, mercury oxide, and carbon oxide compared to the stack gases delivered through the stack.

In any event, the alternative method may involve where the stack gas is circulated through the first catalytic bed, the second catalytic bed, and the third catalytic bed, each positioned between screens of between 150 and 250 mesh. In addition or alternatively, the first catalytic bed, the second catalytic bed, and the third catalytic bed may each be provided on a moving disk. The method may alternatively involve at least two series of sequential through the first catalytic bed, the second catalytic bed, and the third catalytic bed provided in parallel so stack gas can be cleaned by the method through one series of beds while other series of the beds can be purged as described below.

The alternative method may be practiced separately to reduce carbon monoxide and dioxide, sulfur oxides and/or nitrogen dioxides as described in the claims set forth at the end of this application.

Also disclosed is an apparatus for cleaning stack gases comprising:
(a) a first catalytic flow-through bed of natural calcium zeolite with a porosity of a total surface area of not greater than 1200 m²/g adapted to reduce sulfur oxides positioned in an exhaust stack;
(b) a second catalytic flow-through bed of a blend of natural sodium zeolite and natural calcium zeolite of a porosity with a total surface area of not greater than 1200 m²/g adapted to reduce nitrogen oxides positioned in the exhaust stack above the first bed;
(c) a third catalytic flow-through bed of natural calcium zeolite with a porosity of a total surface area not greater than 1200 m²/g adapted to reduce carbon oxides and mercury oxides positioned in the exhaust stack above the second bed; and
(d) the exhaust stack adapted to provide a gas flow selected from the group consisting of volatiles from combustion of coal or combustion of natural gas sequential through the first catalytic bed, the second catalytic bed, and the third catalytic bed each collecting solids in the catalytic beds and providing gas exiting the third catalytic bed with at least 70 or 90% reduction in sulfur oxides, nitrogen oxides, and carbon oxide.

In the apparatus, the blend of natural sodium zeolite and natural calcium zeolite in the second catalytic bed may be between 25 and 75%. The apparatus having the first catalytic bed, the second catalytic bed, and the third catalytic bed may have provided between each bed on moving disks. Further, the first catalytic bed, the second catalytic bed, and the third catalytic bed may also have moving disks such that the stack gases in element (d) can be continually passed through the first catalytic bed, the second catalytic bed, and the third catalytic bed to provide collection of solids and/or liquids while other portions or beds of like compositions are purged with nitrogen to collect the solids and/or liquids from the beds. The apparatus may also be provided in the addition or in the alternative with first catalytic bed, second catalytic bed, and third catalytic bed adapted to be purged with gas or liquid nitrogen to collect the solids and/or liquids from the beds.

The apparatus may also be provided with a fourth catalytic flow-through bed positioned in the exhaust gases before the first catalytic bed with a porosity of a total surface area not greater than 1200 m²/g adapted to collect bauxite compounds before passage through the first catalytic bed. Alternatively, the first catalytic bed, the second catalytic bed, and the third catalytic bed each have a porosity of a total surface area not greater than 800 m²/g and the fourth catalytic flow, if used, may have a porosity of a total surface area not greater than 800 m²/g.

In any event, the apparatus may also provide the gases exiting a stack from the third catalytic bed, whether or not a fourth catalytic flow is used, with at least 90% or 95% reduction in bauxite compounds, sulfur oxides, nitrogen oxides, mercury oxide, and carbon oxide compared to the stack gases delivered through the stack. In the case of cement kilns, the focus is on the reduction of carbon dioxide.

Also disclosed herein is a fertilizer product produced by the steps of:
(a) providing in a stack adapted to pass stack gases through a first catalytic flow-through bed of calcium zeolite comprising natural zeolite particles of a majority between 44 µm and 64 µm in size at a temperature above the dew point between 125 and 500 °F and a pressure between 3 and 200 psi adapted to reduce carbon oxides in the stack gases;
(b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles of a majority between 65 µm and 125 µm in size at a temperature above the dew point between 125 and 500 °F and a pressure between 3 and 200 psi adapted to reduce nitrogen oxides in the stack gases;
(c) providing in the stack adapted to pass stack gases positioned adjacent the second catalytic flow-through bed, a third catalytic flow-through bed of calcium zeolite comprising natural zeolite particles of a majority between 78 µm and 204 µm at a temperature above the dew point between 125 and 500 °F and a pressure between 3 and 200 psi adapted to reduce sulfur oxides in the stack gases;
(d) passing stack gases selected from the group consisting of volatiles from combustion of coal or from combustion of natural gas or from a cement kiln sequential through the first catalytic bed, the second catalytic bed, and the third catalytic bed each collecting materials in the catalytic beds and providing gas exiting the third catalytic bed with at least 70% reduction in sulfur oxides, nitrogen oxides and carbon oxide; and
(e) purging solids and liquids from the first catalytic bed, the second catalytic bed, and the third catalytic bed by intermittently passing nitrogen through the beds to remove solids and liquids collected from the stack gases by the beds.

Alternatively disclosed herein is a fertilizer product produced by the steps of:
(a) providing in a stack adapted to pass stack gases of less than 7% oxygen through a first catalytic flow-through bed of calcium zeolite comprising natural zeolite particles at a temperature above the dew point between 125 and 500 °F and a pressure between 3 and 200 psi adapted to reduce carbon oxides from the stack gases and increase oxygen levels in the stack gas;
(b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles of at a temperature above the dew point between 125 and 500 °F and a pressure between 3 and 200 psi adapted to reduce nitrogen oxides from the stack gases and increase oxygen levels in the stack gas;
(c) providing in the stack adapted to pass stack gases positioned adjacent the second catalytic flow-through bed, a third catalytic flow-through bed of calcium zeolite comprising natural zeolite particles at a temperature above the dew point between 125 and 500 °F and a pressure between 3 and 200 psi adapted to reduce sulfur oxides in the stack gases and increase oxygen levels in the stack gas; and
(d) passing stack gases of less than 7% oxygen selected from the group consisting of volatiles from combustion of coal or from combustion of natural gas or from a cement kiln sequential through the first catalytic bed, the second catalytic bed, and the third catalytic bed each collecting materials in the catalytic beds and providing gas exiting the third catalytic bed with at least 70% reduction in sulfur oxides, nitrogen oxides and carbon oxide and greater than 15% oxygen.

Also disclosed herein is a fertilizer product produced by the steps of:
(a) providing a first catalytic flow-through bed of natural calcium zeolite with a porosity of a total surface area of not greater than 1200 m²/g adapted to reduce sulfur oxides in a stack gas;
(b) providing a second catalytic flow-through bed of a blend of natural sodium zeolite and natural calcium zeolite with a porosity of a total surface area of not greater than 1200 m²/g adapted to reduce nitrogen oxides in a stack gas with the blend of sodium zeolite and calcium zeolite between 25 and 75%;
(c) providing a third catalytic flow-through bed of natural calcium zeolite with a porosity of a total surface area not greater than 1200 m²/g adapted to reduce carbon oxides and mercury oxides in a stack gas;
(d) passing stack gases selected from the group consisting of volatiles from combustion of coal or combustion of natural gas sequential through the first catalytic bed, the second catalytic bed, and the third catalytic bed each collecting solids and liquids in the catalytic beds and providing gas exiting the third catalytic bed with at least 70% reduction in sulfur oxides, nitrogen oxides, and carbon oxide; and
(e) purging the solids and liquids collected on the from the first catalytic bed, the second catalytic bed, and the third catalytic bed and collecting said solids and liquids purged from the first catalytic bed, the second catalytic bed, and the third catalytic bed to provide a fertilizer product.

In any case, the fertilizer product may be purged with gas or liquid nitrogen. The fertilizer product may be produced where the beds providing the first catalytic bed, the second catalytic bed, and the third catalytic bed are each positioned between screens of between 150 and 250 mesh. Alternatively, the fertilizer product may be produced with the stack gas pasted through a fourth catalytic flow-through bed before passage through the first catalytic bed with a porosity of a total surface area not greater than 1200 m²/g adapted to collect bauxite compounds before passage through the first catalytic bed.

In the fertilizer product, the gases exiting a stack from third catalytic bed may be at least 90% or 95% reduction in sulfur oxides, nitrogen oxides, mercury oxide and carbon oxide from the stack gases delivered to the a first catalytic flow-through bed. In the alternative, the gases exiting the third catalytic bed may be at least 90% or even 95% reduction in bauxite compounds, sulfur oxides, nitrogen oxides, mercury oxide, and carbon oxide from the stack gases where the stack gas is delivered to the beds through a fourth catalytic flow.

In the various embodiments of the method, apparatus or fertilizer product, the stack gas may include carbon monoxide (CO), carbon dioxide (CO₂), nitrous oxide (NOₓ), sulfur dioxide (SO₂) and nitrous dioxide (NO₂). The solid waste may also include nitrate salt formed by reaction of nitrogen and nitrogen compounds retained in the zeolet beds with available oxygen. And exit from the third catalytic bed will typically include excess oxygen from the reduction according in the first, second and third catalytic beds, as described above. The apparatus may also include product purged with liquid nitrogen.

In any case, the exiting stack gas with increased oxygen levels may be returned from the gas cleaning system to the burner where it is combusted with the coal or natural gas. The system may also include a solid waste draw for collecting the materials and drawing them away from the gas cleaning section.

Other details, objects and advantages of the present invention will become apparent from the description of the preferred embodiments described below in reference to the accompanying drawings.

### BRIEF DESCRIPTION OF THE DRAWINGS

The following description is described of the accompanying drawings:
FIG. 1 is a schematic illustrating a coal-fired boiler for electric power generation using stack gases that are cleaned and solid/liquid products recovered in accordance with the present invention;
FIG. 2A is an enlarged portion of part of the stack gas cleaning and recovery system shown in FIG. 1 where three catalytic flow beds are utilized;
FIG. 2B is an enlarged portion of part of the stack gas cleaning and recovery shown in FIG. 1 where four catalytic beds are utilized;
FIG. 3 is a cross-section taken along line 3-3 of FIG. 2A or FIG. 2B;
FIG. 4 is a schematic illustrating a test facility designed to test the cleaning of stack gases and recovery of solids and liquids with the invention;
FIG. 5 is an enlarged portion of the test facility shown in FIG. 4;
FIG. 6 is an illustration corresponding to FIG. 5 in top view showing the movement of catalytic flow through three catalytic beds in FIG. 5;
FIG. 7 is an alternative to a test facility corresponding to FIG. 6 where four catalytic flow beds are provided;
FIG. 7A is a graph illustrating CO₂ before and after cleaning;
FIG. 7B is a graph illustrating SO₂ before and after cleaning; and
FIG. 7C is a graph illustrating NO before and after cleaning.

### DETAILED DESCRIPTION OF THE DRAWINGS

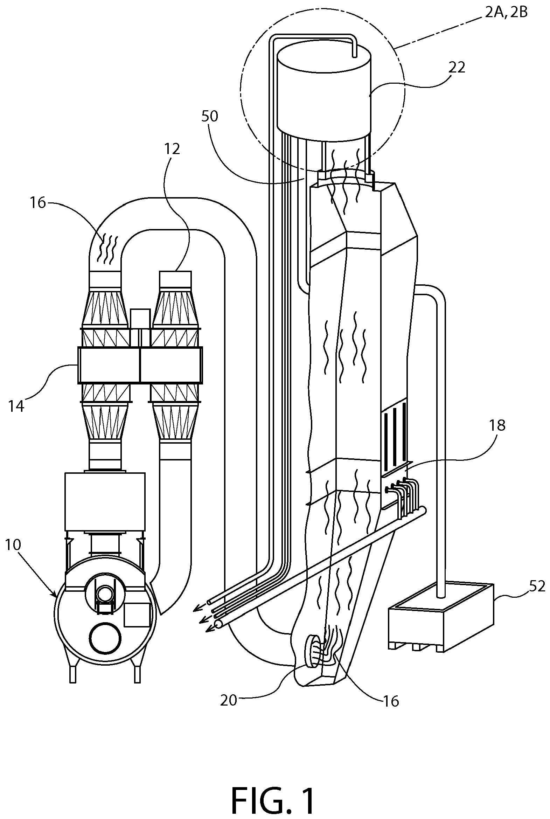

Referring to FIG. 1, schematic illustrating a coal-fired boiler for electric power generation producing stack gases that are cleaned and solid/liquid products recovered. A coal fired boiler 10 is shown utilizing the stack gas cleaning and recovery apparatus and method of the present invention. Fresh air intake 12 flows through preheater 14 to supply preheated fresh air to the boiler 10 that is coal fired. The stack gases 16 from boiler 10 pass through preheater 14 whereby heat is transferred to the fresh air intake 12.

The stack gases 16, now processed by preheater 14, are conveyed to an emission control unit where the stack gases 16 are circulated to emission control system 18 through inlet 20 and allowed to rise through the emission control system 18 and up through gas cleaning apparatus 22. The stack gases 16 at this point typically include carbon monoxide, carbon dioxide, nitrogen oxides and sulphur oxides. The stack gases 16 also include water and particulates, such as aluminum oxides, mercury compounds and other particulate matters, such as uranium and rare earth metals, as well as halogens, such as fluoride and chloride.

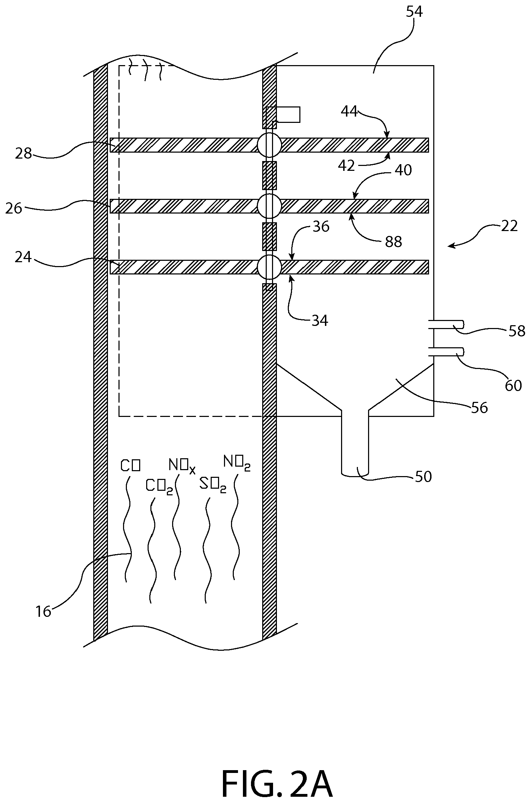

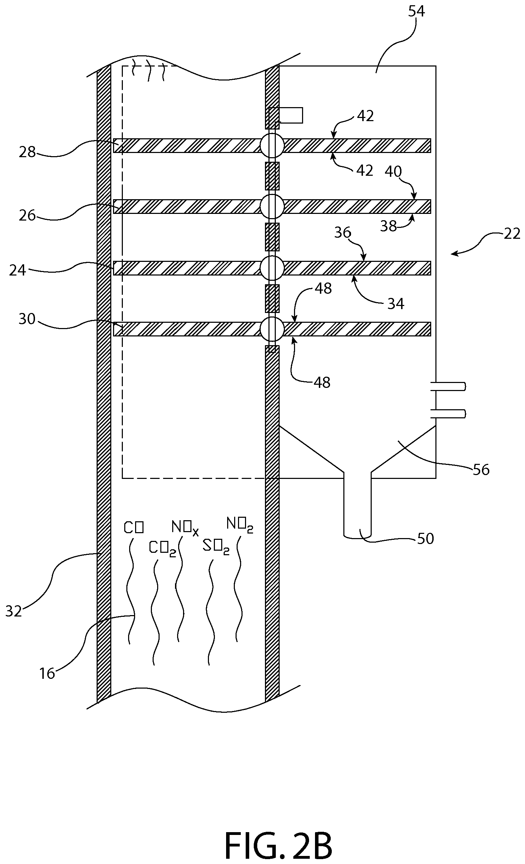

With reference to FIGS. 2A-B, gas cleaning apparatus 22 may comprise first catalytic flow-through bed 24, second catalytic bed 26 and third catalytic flow-through bed 28 as shown in FIG. 2A or through first catalytic flow-through bed 24, second catalytic flow-through bed 26, third catalytic flow-through bed 28 and fourth catalytic flow-through bed 30 as shown in FIG. 2B. In FIG. 2A, the rising stack gases 16 in cleaning apparatus 22 first flow through the first catalytic flow-through bed 24 followed by the adjacent second catalytic flow-through bed 26, and then followed by the third catalytic flow-through bed 28. When fourth catalytic flow-through bed 30 is utilized as shown in FIG. 2B, fourth catalytic flow-through bed 30 in stack 32 in gas stack 16 ahead and adjacent the first catalytic flow-through bed 24.

First catalytic flow through bed 24 is calcium zeolite comprised of natural zeolite particles with a majority between 44 µm and 64 µm in size. By a "majority" in the particle size range means here, as well in this application, that is highest in like particle size increments and that it necessarily is not 50% of the particle sizes in the zeolite of the bed. The calcium zeolite is a calcium-sodium-potassium aluminosilicate that is relative high calcium oxide that is available from a natural source. Typical chemical analyses of such calcium zeolite are (i) 2.85% calcium oxide (CaO), 2.85% potassium oxide (K₂O), 0.98% manganese oxide (MgO), 0.06% manganese oxide (MnO), 0.19% titanium dioxide (TiO₂), 0.05% potassium oxide (P₂0₅), 0.03% sodium oxide (Na₂O), 11.43% aluminum oxide (Al₂O₃), 1.26% ferric oxide (Fe₂O₃) 66.35% silicon dioxide (SiO₂) and 13.28% LOI; and (ii) 3.4% calcium oxide (CaO), 3.0% potassium oxide (K₂O), 1.5% manganese oxide (MgO), 0.05% potassium oxide (P₂O₅), 0.3% sodium oxide (Na₂O), 12.1% aluminum oxide (Al₂O₃), 1.6% ferric oxide (Fe₂O₃), 70.0% silicon dioxide (SiO₂). A source for calcium zeolite, amongst others, is St. Cloud Mining Company mines at Winston and Truth or Consequences, New Mexico 87901, or a similar mine available in other parts of the world. By natural zeolite here and elsewhere in this description refers to that which is mined as opposed to artificial created.

The depth and breadth of the first bed 24 is determined by the flow rate of the stack gases 16 and desired pressure drop, and the physical dimensions of the stack 32 through which stack gases 16 are conveyed at the gas cleaning apparatus 22. First catalytic flow-through bed 24 is provided as a flow through bed held in position by lower screen 34 and upper screen 36 each of between 150 and 250 mesh designed to hold the bed of calcium zeolite in position while allowing flow through of the stack gases 16.

The primary function of first catalytic flow-through bed 24 is to splitting carbon monoxide and carbon dioxide retaining the carbon in the zeolite bed. First catalytic flow-through bed 24 also captures ash and other particular matter as well as bauxite compound if the fourth catalytic flow-through bed 30 is not provided as shown in FIG. 2A.

The stack gases 16 in cleaning apparatus 22 then flow through second catalytic flow-through bed 26 positioned adjacent first catalytic flow-through bed 24. Second catalytic flow-through bed 26 is comprised of a blend between 25 and 75% of sodium zeolite and calcium zeolite with a majority of the natural sodium and calcium zeolite particles between 65 µm and 125 µm in size available from a natural source. The source of the calcium zeolite can be the same as that used to provide first catalytic flow-through bed 24, but with a majority particle size between 65 µm and 125 µm. The sodium zeolite may be natural sodium-potassium clinoptilolite that is relative high sodium oxide. Typical chemical analyses of such sodium zeolite are (i) 3.5% sodium oxide (Na₂O), 3.8% potassium oxide (K₂O), 11.9% aluminum oxide (Al₂O₃), 0.7% ferric oxide (Fe₂O₃), 0.8% calcium oxide (CaO), 0.4% manganese oxide (MgO), 0.02% manganese oxide (MnO), 0.1% titanium oxide (TiO₂) and 69.1% silicon dioxide (SiO₂), and (ii) 3.03% sodium oxide (Na₂O), 3.59% potassium oxide (K₂O), 10.27% aluminum oxide (Al₂O₃), 0.86% ferric oxide (Fe₂O₃), 1.77% calcium oxide (CaO), 0.00% potassium oxide (K₂O), 0.4% manganese oxide (MgO), 0.02% manganese oxide (MnO), 0.11% titanium oxide (TiO₂), 69.1% silicon dioxide (SiO₂), and 13.09% LOI. A source of the sodium zeolite, amongst others, is the St. Cloud mines in Ash Meadows, Nevada, or a similar mine in other parts of the world. Again, the size and depth of the second set of the flow though bed is determined by the physical dimensions of the stack 32 and the flow rate and pressure drop through the stack 32 at the gas cleaning apparatus 22.

The primary purpose of the second flow through bed 26 is to capture and split nitrogen oxides (NOx) in the stack gas 16. The second catalytic flow through bed 26 is also effective in reduce water and metal compounds such as mercury, lead, uranium and other trace materials. Again, a lower screen 38 and an upper screen 40 may be provided with mesh sizes between 150 and 250 mesh to maintain the second catalytic flow-through bed 28 while allowing appropriate flow through of stack gas 16.

On exiting the second catalytic flow-through bed 26, the stack gases 16 flow through the adjacent third catalytic flow-through bed 28. The third catalytic flow-through bed is comprised of calcium zeolite similar in chemical analysis to the first catalytic flow-through bed 24 with a majority of natural zeolite particles size between 78 µm and 204.

The third catalytic flow-through bed 28 is primarily to split sulfur oxides present in the stack gas 16. The third catalytic flow through bed may also reduces sulfur acids, calcium compounds and ash in the stack gas 16. The composition of natural calcium zeolite in third catalytic flow through bed 28 may be of the same composition as the first catalytic flow through bed 24, but with different zeolite particle size as described. Again, a lower screen 42 and an upper screen 44 is with mesh size between 150 and 250 mesh is provided to maintain the third catalytic flow through bed 28.

Thus, a disclosed FIG. 2A is a method of cleaning stack gases comprising the steps of:
(a) providing in a stack adapted to pass stack gases through a first catalytic flow-through bed 24 of calcium zeolite comprising natural zeolite particles of a majority between 44 µm and 64 µm in size at a temperature above the dew point between 125 and 500 °F and a pressure between 3 and 200 psi adapted to reduce carbon oxides from the stack gases;
(b) providing in the stack adapted to pass stack gases positioned adjacent the first catalytic flow-through bed 24, a second catalytic flow-through bed 26 of a blend between 25 and 75% of sodium zeolite and calcium zeolite comprising natural zeolite particles of a majority between 65 µm and 125 µm in size at a temperature above the dew point between 125 and 500 °F and a pressure between 3 and 200 psi adapted to reduce nitrogen oxides in the stack gases;
(c) providing in the stack adapted to pass stack gases positioned adjacent the second catalytic flow-through bed 26, a third catalytic flow-through bed 28 of calcium zeolite comprising natural zeolite particles of a majority between 78 µm and 204 µm at a temperature above the dew point between 125 and 500 °F and a pressure between 3 and 200 psi adapted to reduce sulfur oxides in the stack gases; and (d) passing stack gases selected from the group consisting of volatiles from combustion of coal or from combustion of natural gas or from a cement kiln sequential through the first catalytic bed 24, the second catalytic bed 26, and the third catalytic bed 28 each collecting solids in the catalytic beds and providing gas exiting the third catalytic bed with at least 70% reduction in sulfur oxides, nitrogen oxides and carbon oxide.

The method may also sequentially circulate through the first catalytic bed 24, the second catalytic bed 26, and the third catalytic bed 28 may also involve removal from the stack gas at least 50% or 70% of mercury in all forms, namely, elemental and oxidized forms.

Alternatively disclosed in FIG. 2A is a method of cleaning stack gases comprising the steps of:
(a) providing in a stack adapted to pass stack gases of less than 7% oxygen through a first catalytic flow-through bed 24 of calcium zeolite comprising natural zeolite particles at a temperature above the dew point between 125 and 500 °F and a pressure between 3 and 200 psi adapted to reduce carbon oxides from the stack gases and increase oxygen levels in the stack gas;
(b) providing in the stack adapted to pass stack gases positioned adjacent the first catalytic flow-through bed 24, a second catalytic flow-through bed 26 of a blend between 25 and 75% of sodium zeolite and calcium zeolite comprising natural zeolite particles of a at a temperature above the dew point between 125 and 500 °F and a pressure between 3 and 200 psi adapted to reduce nitrogen oxides from the stack gases and increase oxygen levels in the stack gas;
(c) providing in the stack adapted to pass stack gas positioned adjacent the second catalytic flow-through bed 26, a third catalytic flow-through bed 28 of calcium zeolite comprising natural zeolite particles at a temperature above the dew point between 125 and 500 °F and a pressure between 3 and 200 psi adapted to reduce sulfur oxides in the stack gases and increase oxygen levels in the stack gas; and
(d) passing stack gases of less than 7% oxygen selected from the group consisting of volatiles from combustion of coal or from combustion of natural gas or from a cement kiln sequential through the first catalytic bed 24, the second catalytic bed 26, and the third catalytic bed 28 each collecting solids in the catalytic beds and providing gas exiting the third catalytic bed with at least 70% reduction in sulfur oxides, nitrogen oxides and carbon oxide and greater than 15 % oxygen.

The invention is operative as evidenced by substantial increase in oxygen exiting the third catalytic bed 28 compared to the oxygen levels in the stack gas entering the first catalytic bed 24. The paper by Yoshitaka Toda et al. titled "Activation And Splitting of Carbon Dioxide on The Surface Of An Inorganic Electrode Material" (Published 31 July 2013) suggests a potential mechanism, namely, splitting off oxygen from CO₂ leaving CO to be then reduced. One mechanism to accomplish CO₂ splitting is electrophoresis disassociation of oxygen in the presence of the zeolite catalyst bed into various forms of carbon and oxygen, including oxygen radicals, such as the superoxide O₂- anion. Metal clusters formed in the process in the presence of the zeolite catalyst may also provide additional catalytic activity resulting in CO₂ splitting.

Also, the nitrogen from the stack gas is in large part retained in the zeolite beds and is available for reaction with available oxygen present particularly during purging as described below.

Where a fourth catalytic flow through bed 30 is provided as shown in FIG. 2B, the fourth catalytic flow-through bed is provided in the stack gas 16 adjacent the first catalytic flow-through bed 24. This provides that the gas stream 16 may flow through the fourth catalytic-flow-through bed 30 before flowing into the first catalytic flow-through bed 24. The composition of the fourth catalytic flow-through bed 30 is the same as the first catalytic flow-through bed, namely, comprised of calcium zeolite with a majority of the natural zeolite particles between 44 µm and 64 µm in size. The fourth catalytic flow-through bed is maintained in position by lower screen 46 and upper screen 48 with a mesh size between 150 and 250 while allowing flow of stack gas 16 though the bed. An electrical charge is also provided on the lower screen 46 to provide that the fourth catalytic flow-through bed 30 attracts and retains bauxite particles from stack gas 16. As a result the fourth catalytic flow-through bed 30 of calcium zeolite comprising natural zeolite particles between 44 µm and 64 µm in size positioned in the stack before the first catalytic bed 24 with an electrical charge beneath said fourth catalytic flow- through bed 30 to collect bauxite compounds from the stack gases before passing through the first catalytic bed.

Where the fourth catalytic flow-through catalytic bed 30 is provided as shown in FIG. 2B, aluminum oxide may be largely separately collected and separately processed to recovered as explained below. The stack gas 16 flowing through gas cleaning apparatus 22 is separately cleaned of bauxite compounds as well as cleaned as described above of carbon dioxide, carbon monoxide, nitrogen oxides, sulfur oxides as well as mercury oxides, water and other trace metals in the stack gas 16. The cleaning of the stack gases 16 flow through first catalytic flow-through bed 24, second catalytic flow-through bed 26, third catalytic flow-through bed 28, and if present fourth catalytic flow-through bed 30 provides at least 90%, 95%, or even 99% reduction in bauxite compounds, sulfur oxides, nitrogen oxides, mercury oxides and carbon oxides from the stack gases 16.

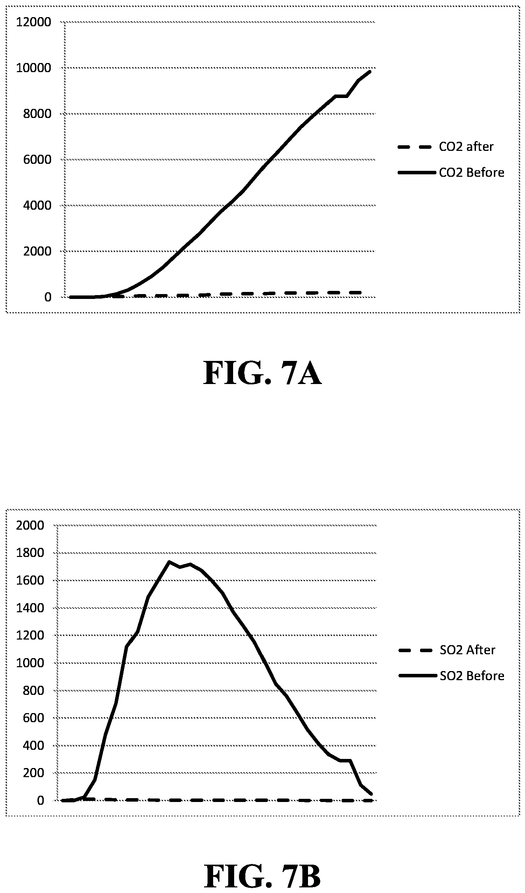

Figures 7A-7C represent data taken from a combustion gas emissions test where charcoal and 3g of organic sulfur were combusted in a combustion oven. During a first test run, data was collected from the lower flue stack before the stack gas 16 passed through the gas cleaning apparatus 22. During a second test run, data was collected from the upper flue stack after the stack gas 16 passed through the gas cleaning apparatus. Data was collected every 5 seconds using a Testo 350XL portable combustion multi-gas analyzer. Data for the first test run (lower flue stack) was compared to and plotted with data for the second test run (upper flue stack) to provide an analysis of the results of the gas cleaning apparatus 22.

FIG. 7A illustrates measured levels of carbon dioxide (CO₂ (ppm) before (solid line) and after (dashed line) the stack gas 16 is cleaned by the cleaning apparatus 22.

FIG. 7B illustrates measured levels of sulfur dioxide (SO₂) (ppm) before (solid line) and after (dashed line) the stack gas 16 is cleaned by the cleaning apparatus 22.

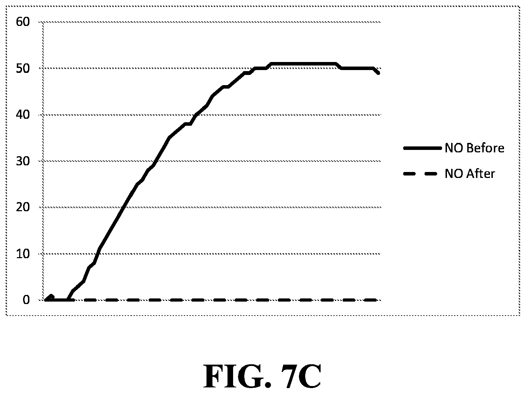

FIG. 7C illustrates measured levels of nitrous oxide (NO) (ppm) before (solid line) and after (dashed line) the stack gas 16 is cleaned by the cleaning apparatus 22.

It was found by the comparison of the data that carbon dioxide in the stack gas 16 was reduced by at least 95% by the stack gas from coal-fired plant entering cleaning apparatus 22; sulfur dioxide in the stack gas 16 was reduced by at least 95% from the stack gas entering the cleaning apparatus 22; and nitrous oxide in the stack gas 16 was split and reduced by 95% or more by the stack gas entering cleaning apparatus 22. These results demonstrate the high effectiveness of the cleaning apparatus 22 in cleaning stack gas from a coal-fired power plant.

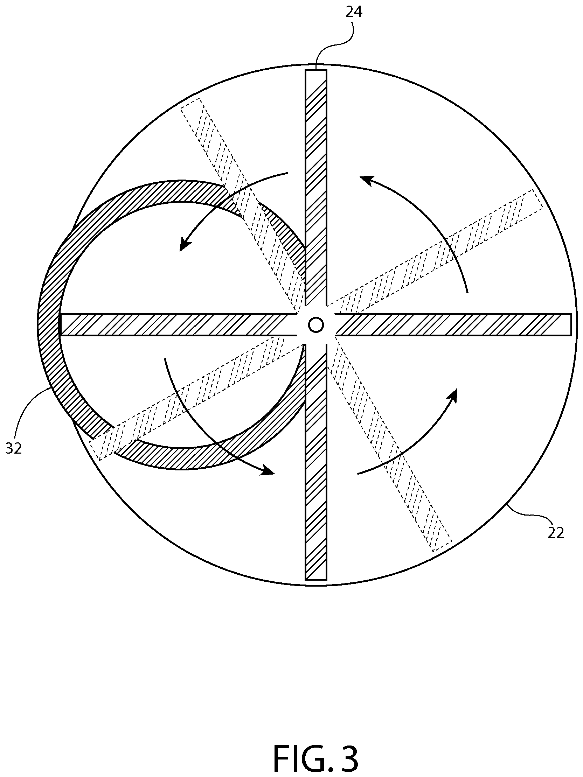

While the cleaning apparatus is in operation 22, material including carbon, sulfur, nitrogen, and other products are collected by the catalytic through-flow beds. Intermittently, as appropriate, the first catalytic through-flow bed 24, second catalytic through-flow bed 26, third catalytic through-flow bed 28 and fourth catalytic through-flow bed 30 (where present) may be switched between parallel systems as shown in FIGS. 2 and 3. The stack gases 16 may, thus, continuing to flow through stack 32 and be cleaned in stack cleaning apparatus 22 while the parallel first catalytic through-flow bed 24, second catalytic through-flow bed 26, third catalytic through-flow bed 28 and fourth catalytic through-flow bed 30 (where present) are rotated off line and purged with nitrogen to remove material from the catalytic beds. This purging of the beds may be done with cryogenic nitrogen or nitrogen gas, or other suitable liquid or gas, generally referred to as a purge fluid.

During the purging process, purge fluid is released from a reservoir 54 and the purging fluid passes through one or more of the first catalytic through-flow bed 24, second catalytic through-flow bed 26, third catalytic through-flow bed 28 and fourth catalytic through-flow bed 30 (where present). The purge fluid may be pressurized or may fall by gravity through one or more of the catalytic through-flow beds, releasing material from the catalytic through-flow beds.

This purging produces a solid waste largely of nitrate composition that is discharged through outlet 50 into a container 52. The nitrate compounds can be formed by reaction of the nitrogen and nitrogen compounds retained by the zeolite beds with the oxygen present during purging. The mechanism of formation of these nitrate fertilizer materials may involve catalytic splitting of the nitrogen compounds present in the stack gas stream into nitrogen retained in the zeolite beds and/or the nitrogen compounds retained in the zeolite beds, which are then available to react with free oxygen atoms and/or oxygen radicals in purging to form nitrate powders. Because large amounts of nitrogen are present in the stack gas stream, relatively large amounts of nitrate compounds may be present in the fertilizers produced. These nitrate fertilizers provide a value byproduct of the present process.

If a fourth catalytic through-flow bed 30 is provided, that bed may be separately purged through a separate outlet into a separate container (not shown) to allow for recovery of bauxite compounds as a separate product. Where a fourth catalytic bed 30 is not provided, the bauxite compounds are collected in the first catalytic through-flow bed 24 and provided as a part of a fertilizer composition and product. The metals such as mercury, zinc, lead and other trace metals are also collected known to be beneficial to soil is collected as part of the fertilizer product that is recovered.

The purging may also produce gases, such as oxygen (O₂) and nitrogen (N₂) that may be extracted by a first gas outlet 58 that transports a portion of the gases (e.g. N₂) to a recycler and a second gas outlet 60 that transports a portion of the gases (e.g. O₂) to the burner for combusting the fuel.

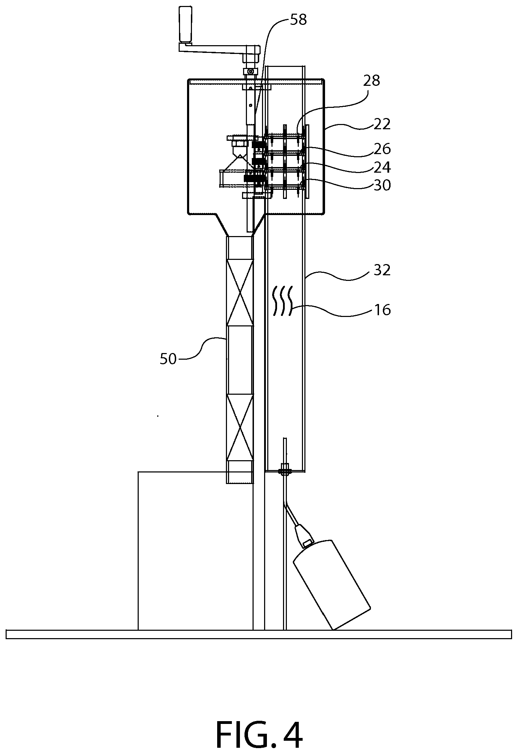

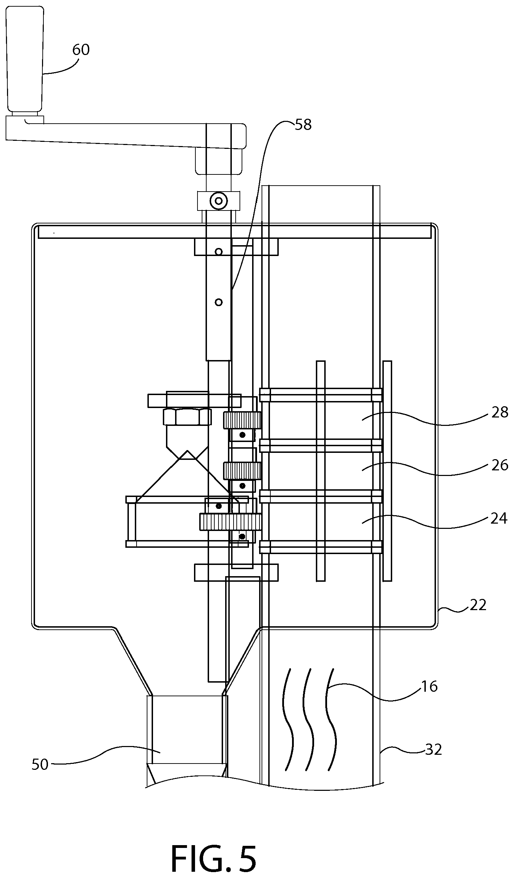

A test apparatus is illustrated in FIGS. 4-5. The testing apparatus includes a stack 32 for transporting stack gas 16 to the gas cleaning apparatus 22 described above. The gas cleaning apparatus 22 is shown in further detail in FIG. 5 and includes first 24, second 26 and third 28 catalytic through-flow beds each having a zeolite composition as described above. Each of the catalytic through-flow beds ay be connected to a central drive shaft 58 that is adapted to rotate or otherwise move each of the catalytic through-flow beds, individually, from a first position where stack gas 16 passes through the bed to a second position where the catalytic through-flow bed is purged by the purge fluid. A handle 60 is provided that may be translated vertically to select one of the catalytic through-flow beds and rotated or otherwise move the selected through-flow bed from the first position to the second position.

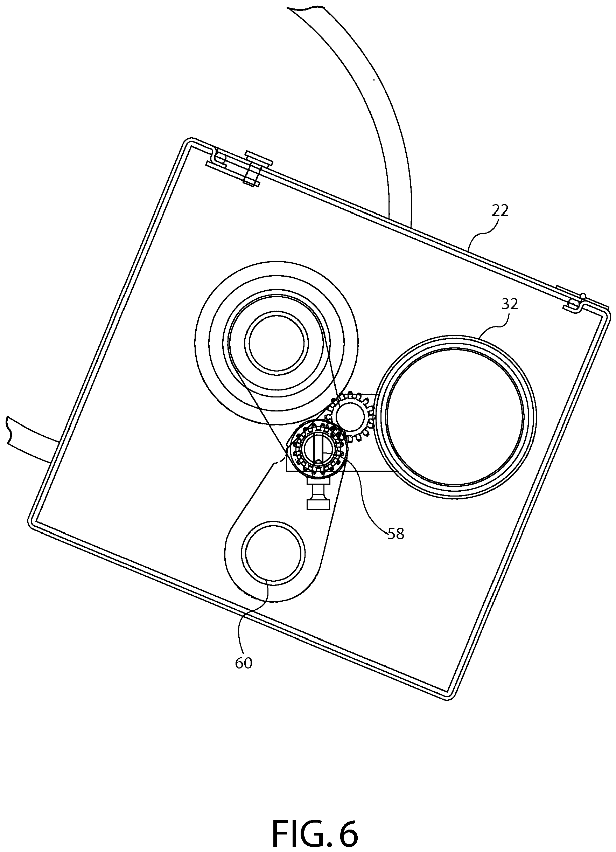

FIG. 6 is a top view of the cleaning apparatus 22 according to the testing apparatus shown in FIGS. 4-5. In this view, the catalytic through-flow beds are aligned with the coal stack 32.

The tests with the test facility shown in FIGS. 4-6 included Kentucky co-fired by propane, Ohio coal fired and two tests with charcoal mixed with organic sulfur. The samples were fired by a propane burner at 62 shown in FIG.4 or in a combustion oven (not shown) before positioning below stack 32. These illustrate the operation of the method and equipment. The data from these tests is set forth in table and graphic form in the Appendix A to this application.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiments disclosed, but that the invention will include all embodiments falling within the scope of the appended claims.

The present application also relates to the following embodiments:
(1) A method of cleaning stack gases comprising the steps of:
   (a) providing in a stack adapted to pass stack gases through a first catalytic flow-through bed of calcium zeolite comprising natural zeolite particles of a majority between 44 µm and 64 µm in size at a temperature above the dew point between 125 and 500 °F and a pressure between 3 and 200 psi adapted to reduce carbon oxides in the stack gases;
   (b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles of a majority between 65 µm and 125 µm in size at a temperature above the dew point between 125 and 500 °F and a pressure between 3 and 200 psi adapted to reduce nitrogen oxides in the stack gases;
   (c) providing in the stack adapted to pass stack gases positioned adjacent the second catalytic flow-through bed, a third catalytic flow-through bed of calcium zeolite comprising natural zeolite particles of a majority between 78 µm and 204 µm at a temperature above the dew point between 125 and 500 °F and a pressure between 3 and 200 psi adapted to reduce sulfur oxides in the stack gases; and
   (d) passing stack gases selected from the group consisting of volatiles from combustion of coal or from combustion of natural gas or from a cement kiln sequential through the first catalytic bed, the second catalytic bed, and the third catalytic bed each collecting materials in the catalytic beds and providing gas exiting the third catalytic bed with at least 70% reduction in sulfur oxides, nitrogen oxides and carbon oxide.
(2) The method as set forth in Embodiment 1 where the beds providing the first catalytic bed, the second catalytic bed, and the third catalytic bed also remove from the stack gas at least 50% of mercury.
(3) The method as set forth in Embodiment 1 where the beds providing the first catalytic bed, the second catalytic bed, and the third catalytic bed are each positioned between screens of between 150 and 250 mesh.
(4) The method as set forth in Embodiment 1 where the first catalytic bed, the second catalytic bed, and the third catalytic bed are each provided on a moving disk.
(5) The method as set forth in Embodiment 1 where at least two series of sequential through the first catalytic bed, the second catalytic bed, and the third catalytic bed are each provided in parallel so stack gas can be cleaned by the method through one series of beds while other series of the beds can be cleaned.
(6) The method as set forth in Embodiment 1 comprising in addition a fourth catalytic flow-through bed of calcium zeolite comprising natural zeolite particles between 44 µm and 64 µm in size positioned in the stack before the first catalytic bed with an electrical charge on said fourth catalytic flow- through bed to collect bauxite compounds from the stack gases before passing through the first catalytic bed.
(7) The method as set forth in Embodiment 1 where the stack gases exiting from third catalytic bed through the stack have at least 95% reduction in sulfur oxides, nitrogen oxides, and carbon oxide compared to the stack gases delivered to the first catalytic flow-through bed.
(8) The method as set forth in Embodiment 6 where the stack gases exiting a stack from the third catalytic bed through the stack is at least 95% reduction in bauxite compound, sulfur oxides, nitrogen oxides, and carbon oxide compared to the stack gases delivered through the stack to the a fourth catalytic flow-through bed.
(9) A method of cleaning stack gases comprising the steps of:
   (a) providing in a stack adapted to pass stack gases through a first catalytic flow-through bed of calcium zeolite comprising natural zeolite particles of a majority between 44 µm and 64 µm in size at a temperature above the dew point between 125 and 500 °F and a pressure between 3 and 200 psi adapted to reduce carbon oxides in the stack gases;
   (b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles of a majority between 65 µm and 125 µm in size at a temperature above the dew point between 125 and 500 °F and a pressure between 3 and 200 psi adapted to reduce nitrogen oxides in the stack gases;
   (c) providing in the stack adapted to pass stack gases positioned adjacent the second catalytic flow-through bed, a third catalytic flow-through bed of calcium zeolite comprising natural zeolite particles of a majority between 78 µm and 204 µm at a temperature above the dew point between 125 and 500 °F and a pressure between 3 and 200 psi adapted to reduce sulfur oxides in the stack gases;
   (d) passing stack gases selected from the group consisting of volatiles from combustion of coal or from combustion of natural gas or from a cement kiln sequential through the first catalytic bed, the second catalytic bed, and the third catalytic bed each collecting materials in the catalytic beds and providing gas exiting the third catalytic bed with at least 70% reduction in sulfur oxides, nitrogen oxides and carbon oxide; and
   (e) purging solids and liquids from the first catalytic bed, the second catalytic bed, and the third catalytic bed by intermittently passing nitrogen through the beds to remove solids and liquids collected from the stack gases by the beds.
(10) The method as set forth in Embodiment 9 where the beds providing the first catalytic bed, the second catalytic bed, and the third catalytic bed also remove from the stack gas at least 50% of mercury.
(11) The method as set forth in Embodiment 9 where the beds providing the first catalytic bed, the second catalytic bed, and the third catalytic bed are each positioned between screens of between 150 and 350 mesh.
(12) The method as set forth in Embodiment 9 where first catalytic bed, second catalytic bed, and third catalytic bed are purged with liquid nitrogen to remove the solids and liquids from collected from stack gas by the beds.
(13) The method as set forth in Embodiment 9 where the first catalytic bed, the second catalytic bed, and the third catalytic bed are each provided on a moving disk.
(14) The method as set forth in Embodiment 9 where the first catalytic bed, the second catalytic bed, and the third catalytic bed are each provided on a moving disk such that the stack gases in step (d) can be continuously passed through the first catalytic bed, the second catalytic bed, and the third catalytic bed to provide collection of solids and/or liquids from the stack gases while other portions of the same bed or like beds are purged with nitrogen to remove the solids and liquids from the stack gas by the beds.
(15) The method as set forth in Embodiment 9 where at least two series of sequential through the first catalytic bed, the second catalytic bed, and the third catalytic bed are provided in parallel so stack gas can be cleaned by the method through one series of beds while other series of the beds can be cleaned,
(16) The method as set forth in Embodiment 11 where first catalytic bed, second catalytic bed, and third catalytic bed are purged with liquid nitrogen to remove the solids and liquids from collected from stack gas by the beds.
(17) The method as set forth in Embodiment 9 comprising in addition a fourth catalytic flow-through bed of calcium zeolite comprising natural zeolite particles between 44 µm and 64 µm in size positioned in the stack before the first catalytic bed with an electrical charge beneath said fourth catalytic flow-through bed to collect bauxite compounds from the stack gases before passing through the first catalytic bed.
(18) The method as set forth in Embodiment 9 where the fourth catalytic flow-through bed is on a rotating disk so the stack gases are continuously move through the fourth bed while other portions of the same beds or a like bed are purged with nitrogen to remove solids and liquids collected from the stack gas by the fourth bed.
(19) The method as set forth in Embodiment 18 where the nitrogen is liquid nitrogen.
(20) The method as set forth in Embodiment 9 where the beds providing the first catalytic bed, the second catalytic bed, and the third catalytic bed also remove from the stack gas at least 90% of mercury.
(21) The method as set forth in Embodiment 9 where the stack gases exiting from third catalytic bed through the stack have at least 95% reduction in sulfur oxides, nitrogen oxides, and carbon oxide compared to the stack gases delivered to the a first catalytic flow-through bed.
(22) The method as set forth in Embodiment 9 where the beds providing the first catalytic bed, the second catalytic bed, and the third catalytic bed also remove from the stack gas at least 70% of mercury.
(23) The method as set forth in Embodiment 17 where the stack gases exiting from third catalytic bed through the stack have at least 95% reduction in bauxite compounds, sulfur oxides, nitrogen oxides, and carbon oxide compared to the stack gases delivered through the stack to the fourth catalytic flow-through bed.
(24) A method of cleaning stack gases comprising the steps of:
   (a) providing in a stack adapted to pass stack gases of less than 7% oxygen through a first catalytic flow-through bed of calcium zeolite comprising natural zeolite particles at a temperature above the dew point between 125 and 500 °F and a pressure between 3 and 200 psi adapted to reduce carbon oxides from the stack gases and increase oxygen levels in the stack gas;
   (b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles at a temperature above the dew point between 125 and 500 °F and a pressure between 3 and 200 psi adapted to reduce nitrogen oxides from the stack gases and increase oxygen levels in the stack gas;
   (c) providing in the stack adapted to pass stack gases positioned adjacent the second catalytic flow-through bed, a third catalytic flow-through bed of calcium zeolite comprising natural zeolite particles at a temperature above the dew point between 125 and 500 °F and a pressure between 3 and 200 psi adapted to reduce sulfur oxides in the stack gases and increase oxygen levels in the stack gas; and
   (d) passing stack gases of less than 7% oxygen selected from the group consisting of volatiles from combustion of coal or from combustion of natural gas or from a cement kiln sequential through the first catalytic bed, the second catalytic bed, and the third catalytic bed each collecting materials in the catalytic beds and providing gas exiting the third catalytic bed with at least 70% reduction in sulfur oxides, nitrogen oxides and carbon oxide and greater than 15 % oxygen.
(25) The method as set forth in Embodiment 24 where the beds providing the first catalytic bed, the second catalytic bed, and the third catalytic bed are each positioned between screens of between 150 and 250 mesh.
(26) The method as set forth in Embodiment 24 where the first catalytic bed, the second catalytic bed, and the third catalytic bed are each provided on a moving disk.
(27) The method as set forth in Embodiment 24 where at least two series of sequential through the first catalytic bed, the second catalytic bed, and the third catalytic bed are each provided in parallel so stack gas can be cleaned by the method through one series of beds while other series of the beds can be cleaned.
(28) The method as set forth in Embodiment 24 comprising in addition a fourth catalytic flow- through bed of calcium zeolite comprising natural zeolite particles in the stack before the first catalytic bed with an electrical charge on said fourth catalytic flow-through bed to collect bauxite compounds from the stack gases before passing through the first catalytic bed and increase oxygen levels in the stack gas.
(29) The method as set forth in Embodiment 24 where the stack gases exiting from third catalytic bed through the stack have at least 95% reduction in sulfur oxides, nitrogen oxides, and carbon oxide compared to the stack gases delivered to the first catalytic flow-through bed.
(30) The method as set forth in Embodiment 28 where the stack gases exiting a stack from the third catalytic bed through the stack is at least 95% reduction in bauxite compounds, sulfur oxides, nitrogen oxides, and carbon oxide compared to the stack gases delivered through the stack to the a fourth catalytic flow-through bed.
(31) A method of cleaning stack gases comprising the steps of:
   (a) providing in a stack adapted to pass stack gases through a first catalytic flow-through bed of calcium zeolite comprising natural zeolite particles at a temperature above the dew point between 125 and 500 °F and a pressure between 3 and 200 psi adapted to reduce carbon oxides from the stack gases and increase oxygen levels in the stack gas;
   (b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles at a temperature above the dew point between 125 and 500 °F and a pressure between 3 and 200 psi adapted to reduce nitrogen oxides from the stack gases and increase oxygen levels in the stack gas;
   (c) providing in the stack adapted to pass stack gases positioned adjacent the second catalytic flow-through bed, a third catalytic flow-through bed of calcium zeolite comprising natural zeolite particles at a temperature above the dew point between 125 and 500 °F and a pressure between 3 and 200 psi adapted to reduce sulfur oxides in the stack gases and increase oxygen levels in the stack gas;
   (d) passing stack gases of less than 7% oxygen selected from the group consisting of volatiles from combustion of coal or from combustion of natural gas or from a cement kiln sequential through the first catalytic bed, the second catalytic bed, and the third catalytic bed each collecting solids in the catalytic beds and providing gas exiting the third catalytic bed with at least 70% reduction in sulfur oxides, nitrogen oxides and carbon oxide and at least 15% oxygen; and
   (e) purging solids and liquids from the first catalytic bed, the second catalytic bed, and the third catalytic bed by intermittently passing nitrogen through the beds to remove solids and liquids collected from the stack gases by the beds.
(32) The method as set forth in Embodiment 31 where the beds providing the first catalytic bed, the second catalytic bed, and the third catalytic bed are each positioned between screens of between 150 and 350 mesh.
(33) The method as set forth in Embodiment 31 where first catalytic bed, second catalytic bed, and third catalytic bed are purged with liquid nitrogen to remove the solids and liquids from collected from stack gas by the beds.
(34) The method as set forth in Embodiment 31 where the first catalytic bed, the second catalytic bed, and the third catalytic bed are each provided on a moving disk.
(35) The method as set forth in Embodiment 31 where the first catalytic bed, the second catalytic bed, and the third catalytic bed are each provided on a rotating disk such that the stack gases in step (d) can be continuously passed through the first catalytic bed, the second catalytic bed, and the third catalytic bed to provide collection of solids and/or liquids from the stack gases while other portions of the same bed or like beds are purged with nitrogen to remove solids and liquids from the stack gas by the beds.
(36) The method as set forth in Embodiment 31 where at least two series of sequential through the first catalytic bed, the second catalytic bed, and the third catalytic bed are provided in parallel so stack gas can be cleaned by the method through one series of beds while other series of the beds can be cleaned.
(37) The method as set forth in Embodiment 31 where first catalytic bed, second catalytic bed, and third catalytic bed are purged with liquid nitrogen to remove the solids and liquids from collected from stack gas by the beds.
(38) The method as set forth in Embodiment 31 comprising in addition a fourth catalytic flow- through bed of calcium zeolite comprising natural zeolite particles positioned in the stack before the first catalytic bed with an electrical charge on said fourth catalytic flow-through bed to collect bauxite compounds from the stack gases before passing through the first catalytic bed.
(39) The method as set forth in Embodiment 31 where the fourth catalytic flow-through bed is on a rotating disk so the stack gases are continuously move through the fourth bed while other portions of the same beds or a like bed are purged with nitrogen to remove solids and liquids collected from the stack gas by the fourth bed.
(40) The method as set forth in Embodiment 39 where the nitrogen is liquid nitrogen.
(41) The method as set forth in Embodiment 31 where the stack gases exiting from third catalytic bed through the stack have at least 95% reduction in sulfur oxides, nitrogen oxides, and carbon oxide compared to the stack gases delivered to the a first catalytic flow-through bed.
(42) The method as set forth in Embodiment 38 where the stack gases exiting from third catalytic bed through the stack have at least 95% reduction in bauxite compounds , sulfur oxides, nitrogen oxides, and carbon oxide compared to the stack gases delivered through the stack to the fourth catalytic flow-through bed.
(43) A method of cleaning sulfur oxides stack gases comprising the steps of:
   (a) positioning a catalytic flow-through bed of natural calcium zeolite with a porosity of a total surface area of not greater than 1200 m²/g adapted to reduce sulfur oxides in a stack gas; and
   (b) passing stack gases selected from the group consisting of volatiles from combustion of coal or combustion of natural gas sequential through the catalytic bed with at least 90% reduction in sulfur oxides.
(44) The method as set forth in Embodiment 43 where the catalytic bed is positioned between screens each of between 150 and 250 mesh.
(45) The method as set forth in Embodiment 43 where the catalytic bed is provided on moving disks.
(46) The method as set forth in Embodiment 43 where the catalytic bed is provided on a moving disk such that the stack gases in step (a) can be continually passed through the catalytic bed to provide collection of solids and/or liquids while other portions or beds are purged with nitrogen to collect the solids and/or liquids from the beds.
(47) The method as set forth in Embodiment 46 where the catalytic bed is purged with liquid nitrogen to collect the solids and/or liquids from the beds.
(48) The method as set forth in Embodiment 43 where in addition the stack gas is pasted through another catalytic flow-through bed before passing through the first catalytic bed with a porosity of a total surface area not greater than 1200 m²/g adapted to collect bauxite compounds before passage through the first catalytic bed.
(49) The method as set forth in Embodiment 48 where the other catalytic flow-through bed is on a moving disk so the stack gases are continuously moved through the other bed while another portion of the disk is being purged with nitrogen.
(50) The method as set forth in Embodiment 43 where the catalytic bed have a porosity of a total surface area not greater than 800 m²/g.
(51) The method as set forth in Embodiment 48 where the other catalytic flow-through bed has a porosity of a total surface area not greater than 800 m²/g.
(52) The method as set forth in Embodiment 43 where the gases exiting a stack from catalytic bed has at least 95% reduction in sulfur oxide from the stack gases delivered to the other catalytic flow-through bed.
(53) Apparatus for cleaning stack gases comprising:
   (a) a first catalytic flow-through bed of natural calcium zeolite with a porosity of a total surface area of not greater than 1200 m²/g adapted to reduce sulfur oxides positioned in an exhaust stack;
   (b) a second catalytic flow-through bed of a blend of natural sodium zeolite and natural calcium zeolite of a porosity with a total surface area of not greater than 1200 m²/g adapted to reduce nitrogen oxides positioned in the exhaust stack above the first bed;
   (c) a third catalytic flow-through bed of natural calcium zeolite with a porosity of a total surface area not greater than 1200 m²/g adapted to reduce carbon oxides and mercury oxides positioned in the exhaust stack above the second bed; and
   (d) the exhaust stack adapted to provide a gas flow selected from the group consisting of volatiles from combustion of coal or combustion of natural gas sequential through the first catalytic bed, the second catalytic bed, and the third catalytic bed each collecting solids in the catalytic beds and providing gas exiting the third catalytic bed with at least 90% reduction in sulfur oxides, nitrogen oxides, and carbon oxide.
(54) The apparatus as set forth in Embodiment 53 where the beds providing the first catalytic bed, the second catalytic bed, and the third catalytic bed are each positioned between screens of between 150 and 250 mesh.
(55) The apparatus as set forth in Embodiment 53 where the blend of natural sodium zeolite and natural calcium zeolite in the second catalytic bed is between 25 and 75%.
(56) The apparatus as set forth in Embodiment 53 where the first catalytic bed, the second catalytic bed, and the third catalytic bed are each provided on moving disks.
(57) The apparatus as set forth in Embodiment 53 where the first catalytic bed, the second catalytic bed, and the third catalytic bed are each provided on moving disks such that the stack gases in element (d) can be continually passed through the first catalytic bed, the second catalytic bed, and the third catalytic bed to provide collection of solids and/or liquids while other portions or beds of like compositions are purged with nitrogen to collect the solids and/or liquids from the beds.
(58) The apparatus as set forth in Embodiment 53 where first catalytic bed, second catalytic bed, and third catalytic bed are adapted to be purged with liquid nitrogen to collect the solids and/or liquids from the beds.
(59) The apparatus as set forth in Embodiment 53 where a fourth catalytic flow-through bed is provided in the exhaust below the first catalytic bed with a porosity of a total surface area not greater than 1200 m²/g adapted to collect bauxite compounds before passage through the first catalytic bed.
(60) The apparatus as set forth in Embodiment 59 where the fourth catalytic flow-through bed is a moving disk so the stack gases are continuously move there through while another portion of the disk is being purged with nitrogen.
(61) The apparatus as set forth in Embodiment 60 where the nitrogen is liquid nitrogen.
(62) The apparatus as set forth in Embodiment 53 where the beds providing first catalytic bed, second catalytic bed, and third catalytic bed each have a porosity of a total surface area not greater than 800 m²/g.
(63) The apparatus as set forth in Embodiment 59 where the fourth catalytic flow-through bed has a porosity af a total surface area not greater than 800 m²/g.
(64) The apparatus as set forth in Embodiment 53 where the fourth catalytic flow-through bed has a porosity of a total surface area not greater than 800 m²/g.
(65) The apparatus as set forth in Embodiment 53 where the exhaust is adapted to exit gases from third catalytic bed having at least 95% reduction in sulfur oxides, nitrogen oxides, mercury oxide and carbon oxide compared to the stack gases delivered to the a first catalytic flow-through bed.
(66) The apparatus as set forth in Embodiment 59 where the stack is adapted to exit gases from third catalytic bed with at least 95% reduction in bauxite compounds, sulfur oxides, nitrogen oxides, mercury oxides, and carbon oxide from the stack gases delivered to the a fourth catalytic flow-through bed.
(67) An apparatus of cleaning sulfur oxides from stack gases comprising:
   (a) a stack adapted to provide for exit of stack gases;
   (b) a catalytic flow-through bed of natural calcium zeolite with a porosity with a total surface area of not greater than 1200 m²/g adapted to reduce sulfur oxides positioned in the stack; and
   (c) the stack adapted to provide for flow-through gases selected from the group consisting of volatiles from combustion of coal or combustion of natural gas the catalytic bed to provide for at least 90% reduction in sulfur oxides exiting from the stack compared to the sulfur oxide content in the stack gases delivered to the catalytic flow-through bed.
(68) The apparatus as set forth in Embodiment 67 where the catalytic bed is positioned between screens each of between 150 and 250 mesh.
(69) The apparatus as set forth in Embodiment 67 where the catalytic bed is provided on rotating disk.
(70) The apparatus as set forth in Embodiment 67 where the catalytic bed is provided on a rotating disk such that the stack gases in step (c) can be continually passed through the catalytic bed to provide collection of solids and/or liquids while other portions or beds is purged with nitrogen to collect the solids and/or liquids from the beds.
(71) The apparatus as set forth in Embodiment 70 where the catalytic bed is purged with liquid nitrogen to collect the solids and/or liquids from the beds.
(72) The apparatus as set forth in Embodiment 67 where in addition positioned in the stack another catalytic flow-through bed below the first catalytic bed with a porosity of a total surface area not greater than 1200 m²/g adapted to collect bauxite compounds before passage through the first catalytic bed.
(73) The apparatus as set forth in Embodiment 72 where the other catalytic flow-through bed is on a moviing disk so the stack gases continuously move through said other bed while another portion of the disk is being purged with nitrogen.
(74) The apparatus in Embodiment 67 where the catalytic bed have a porosity of a total surface area not greater than 800 m²/g.
(75) The apparatus as set forth in Embodiment 72 where the other catalytic flow-through bed has a porosity of a total surface area not greater than 800 m²/g.
(76) The apparatus method as set forth in Embodiment 67 where the gases exiting the stack from catalytic bed has at least 95% reduction in sulfur oxide compared to the stack gases delivered to the catalytic flow-through bed.
(77) A fertilizer product produced by the steps of:
   (a) providing in a stack adapted to pass stack gases through a first catalytic flow-through bed of calcium zeolite comprising natural zeolite particles of a majority between 44 µm and 64 µm in size at a temperature above the dew point between 125 and 500 °F and a pressure between 3 and 200 psi adapted to reduce carbon oxides in the stack gases;
   (b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles of a majority between 65 µm and 125 µm in size at a temperature above the dew point between 125 and 500 °F and a pressure between 3 and 200 psi adapted to reduce nitrogen oxides in the stack gases;
   (c) providing in the stack adapted to pass stack gases positioned adjacent the second catalytic flow-through bed, a third catalytic flow-through bed of calcium zeolite comprising natural zeolite particles of a majority between 78 µm and 204 µm at a temperature above the dew point between 125 and 500 °F and a pressure between 3 and 200 psi adapted to reduce sulfur oxides in the stack gases;
   (d) passing stack gases selected from the group consisting of volatiles from combustion of coal or from combustion of natural gas or from a cement kiln sequential through the first catalytic bed, the second catalytic bed, and the third catalytic bed each collecting materials in the catalytic beds and providing gas exiting the third catalytic bed with at least 70% reduction in sulfur oxides, nitrogen oxides and carbon oxide; and
   (e) purging solids and liquids from the first catalytic bed, the second catalytic bed, and the third catalytic bed by intermittently passing nitrogen through the beds to remove solids and liquids collected from the stack gases by the beds.
(78) A fertilizer product produced by the steps of:
   (a) providing in a stack adapted to pass stack gases of less than 7% oxygen through a first catalytic flow-through bed of calcium zeolite comprising natural zeolite particles at a temperature above the dew point between 125 and 500 °F and a pressure between 3 and 200 psi adapted to reduce carbon oxides from the stack gases and increase oxygen levels in the stack gas;
   (b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles of at a temperature above the dew point between 125 and 500 °F and a pressure between 3 and 200 psi adapted to reduce nitrogen oxides from the stack gases and increase oxygen levels in the stack gas;
   (c) providing in the stack adapted to pass stack gases positioned adjacent the second catalytic flow-through bed, a third catalytic flow-through bed of calcium zeolite comprising natural zeolite particles at a temperature above the dew point between 125 and 500 °F and a pressure between 3 and 200 psi adapted to reduce sulfur oxides in the stack gases and increase oxygen levels in the stack gas; and
   (d) passing stack gases of less than 7% oxygen selected from the group consisting of volatiles from combustion of coal or from combustion of natural gas or from a cement kiln sequential through the first catalytic bed, the second catalytic bed, and the third catalytic bed each collecting materials in the catalytic beds and providing gas exiting the third catalytic bed with at least 70% reduction in sulfur oxides, nitrogen oxides and carbon oxide and greater than 15 % oxygen.
(79) A fertilizer product produced by the steps of:
   (a) providing a first catalytic flow-through bed of natural calcium zeolite with a porosity of a total surface area of not greater than 1200 m²/g adapted to reduce sulfur oxides in a stack gas;
   (b) providing a second catalytic flow-through bed of a blend of natural sodium zeolite and natural calcium zeolite with a porosity of a total surface area not greater than 1200 m²/g adapted to reduce nitrogen oxides in a stack gas and the blend of sodium zeolite and calcium zeolite is between 25 and 75%;
   (c) providing a third catalytic flow-through bed of natural calcium zeolite with a porosity of a total surface area not greater than 1200 m²/g adapted to reduce carbon oxides and mercury oxides in a stack gas;
   (d) passing stack gases selected from the group consisting of volatiles from combustion of coal or combustion of natural gas sequential through the first catalytic bed, the second catalytic bed, and the third catalytic bed each collecting solids and liquids in the catalytic beds and providing gas exiting the third catalytic bed with at least 90% reduction in sulfur oxides, nitrogen oxides, and carbon oxide; and
   (e) purging the solids and liquids collected from the first catalytic bed, the second catalytic bed, and the third catalytic bed and collecting said solids and liquids purged from the first catalytic bed, the second catalytic bed, and the third catalytic bed to provide a fertilizer product.
(80) The fertilizer product as set forth in Embodiment 79 where the beds providing the first catalytic bed, the second catalytic bed, and the third catalytic bed are each positioned between screens of between 150 and 250 mesh.
(81) The fertilizer product as set forth in Embodiment 79 where in addition the stack gas is pasted through a fourth catalytic flow-through bed before passage through the first catalytic bed with a porosity of a total surface area not greater than 1200 m²/g adapted to collect bauxite compounds before passage through the first catalytic bed.
(82) The fertilizer product set forth in Embodiment 79 where the fourth catalytic flow-through bed is being purged with nitrogen.
(83) The fertilizer product as set forth in Embodiment 82 where the nitrogen is liquid nitrogen.
(84) The fertilizer product as set forth in Embodiment 79 where the gases exiting a stack from third catalytic bed have at least 95% reduction in sulfur oxides, nitrogen oxides, mercury oxide and carbon oxide from the stack gases delivered to the a first catalytic flow-through bed.
(85) The fertilizer product as set forth in Embodiment 81 where the gases exiting the stack from third catalytic bed is at least 95% reduction in bauxite compounds, sulfur oxides, nitrogen oxides, mercury oxides, and carbon oxide from the stack gases delivered to the a fourth catalytic flow-through bed.

## Claims

1. A method of cleaning stack gases comprising the steps of:
(a) providing in a stack adapted to pass stack gases through a first catalytic flow-through bed of calcium zeolite comprising natural zeolite particles of a majority between 44 µm and 64 µm in size at a temperature above the dew point between 51.67 and 260°C (between 125 and 500 °F) and a pressure between 0.02 and 1.38 MPa (between 3 and 200 psi) adapted to reduce carbon oxides in the stack gases;
(b) providing in the stack adapted to pass stack gases positioned adjacent the first catalytic flow-through bed, a second catalytic flow-through bed of a blend between 25 and 75% of sodium zeolite and calcium zeolite comprising natural sodium and calcium zeolite particles of a majority between 65 µm and 125 µm in size at a temperature above the dew point between 51.67 and 260°C (between 125 and 500 °F) and a pressure between 0.02 and 1.38 MPa (between 3 and 200 psi) adapted to reduce nitrogen oxides in the stack gases;
(c) providing in the stack adapted to pass stack gases positioned adjacent the second catalytic flow-through bed, a third catalytic flow-through bed of calcium zeolite comprising natural zeolite particles of a majority between 78 µm and 204 µm in size at a temperature above the dew point between 51.67 and 260°C (between 125 and 500 °F) and a pressure between 0.02 and 1.38 MPa (between 3 and 200 psi) adapted to reduce sulfur oxides in the stack gases; and
(d) passing stack gases selected from the group consisting of volatiles from combustion of coal or from combustion of natural gas or from a cement kiln sequential through the first catalytic bed, the second catalytic bed, and the third catalytic bed each collecting materials in the catalytic beds and providing gas exiting the third catalytic bed with at least 70% reduction in sulfur oxides, nitrogen oxides and carbon oxide.

2. The method as set forth in Claim 1 further comprising the step of:
(e) purging solids and liquids from the first catalytic bed, the second catalytic bed, and the third catalytic bed by intermittently passing nitrogen through the beds to remove solids and liquids collected from the stack gases by the beds.

3. The method as set forth in Claim 1 or 2 wherein the first catalytic bed, the second catalytic bed, and the third catalytic bed also remove from the stack gas at least 50% of mercury, preferably at least 70% of mercury, more preferably at least 90% of mercury.

4. The method as set forth in Claim 1 or 2 wherein the first catalytic bed, the second catalytic bed, and the third catalytic bed are each positioned between screens of between 150 and 250 mesh.

5. The method as set forth in Claim 1 or 2 wherein the first catalytic bed, the second catalytic bed, and the third catalytic bed are each provided on a moving disk.

6. The method as set forth in Claim 1 or 2 wherein at least two series of sequential circulations through the first catalytic bed, the second catalytic bed, and the third catalytic bed are each provided in parallel so stack gas can be cleaned by the method through one series of beds while other series of the beds can be cleaned.

7. The method as set forth in Claim 1 or 2 wherein the stack gases exiting from the third catalytic bed through the stack have at least 95% reduction in sulfur oxides, nitrogen oxides, and carbon oxide compared to the stack gases delivered to the first catalytic flow-through bed.

8. The method as set forth in Claim 1 or 2 comprising in addition a fourth catalytic flow-through bed of calcium zeolite comprising natural zeolite particles between 44 µm and 64 µm in size positioned in the stack before the first catalytic bed with an electrical charge on said fourth catalytic flow-through bed to collect bauxite compounds from the stack gases before passing through the first catalytic bed.

9. The method as set forth in Claim 8 wherein the stack gases exiting from the third catalytic bed through the stack is at least 95% reduction in bauxite compound, sulfur oxides, nitrogen oxides, and carbon oxide compared to the stack gases delivered through the stack to the fourth catalytic flow-through bed.

10. The method as set forth in Claim 1 or 2 wherein the first catalytic bed, the second catalytic bed, and the third catalytic bed each has a porosity of a total surface area of not greater than 1200 m²/g, preferably not greater than 800 m²/g.

11. The method as set forth in Claim 8 wherein the first catalytic bed, the second catalytic bed, the third catalytic bed and the fourth catalytic bed each has a porosity of a total surface area of not greater than 1200 m²/g, preferably not greater than 800 m²/g.

12. The method as set forth in Claim 1 or 2 wherein the stack is adapted to pass stack gasses of less than 7% oxygen.

13. The method as set forth in Claim 2 wherein the first catalytic bed, the second catalytic bed, and the third catalytic bed are purged with liquid nitrogen to remove the solids and liquids collected from stack gas by the beds.

14. The method as set forth in Claim 2 wherein the first catalytic bed, the second catalytic bed, and the third catalytic bed are each provided on a moving disk such that the stack gases in step (d) can be continuously passed through the first catalytic bed, the second catalytic bed, and the third catalytic bed to provide collection of solids and/or liquids from the stack gases while other portions of the same bed or like beds are purged with nitrogen to remove the solids and liquids from the stack gas by the beds.

15. The method as set forth in Claim 8 wherein the fourth catalytic flow-through bed is on a rotating disk so the stack gases are continuously moved through the fourth bed while other portions of the same bed or like bed are purged with nitrogen to remove solids and liquids collected from the stack gas by the fourth bed.

16. The method as set forth in Claim 14 or 15 wherein the nitrogen is liquid nitrogen.

17. The method as set forth in Claim 1 or 2 further comprising the step of producing a fertilizer product.

18. An apparatus for cleaning stack gases comprising:
(a) a first catalytic flow-through bed of natural calcium zeolite with a porosity of a total surface area of not greater than 1200 m²/g adapted to reduce sulfur oxides positioned in an exhaust stack;
(b) a second catalytic flow-through bed of a blend of natural sodium zeolite and natural calcium zeolite of a porosity with a total surface area of not greater than 1200 m²/g adapted to reduce nitrogen oxides positioned in the exhaust stack above the first bed;
(c) a third catalytic flow-through bed of natural calcium zeolite with a porosity of a total surface area not greater than 1200 m²/g adapted to reduce carbon oxides and mercury oxides positioned in the exhaust stack above the second bed; and
(d) the exhaust stack adapted to provide a gas flow selected from the group consisting of volatiles from combustion of coal or combustion of natural gas sequential through the first catalytic bed, the second catalytic bed, and the third catalytic bed each collecting solids in the catalytic beds and providing gas exiting the third catalytic bed with at least 70% reduction in sulfur oxides, nitrogen oxides, and carbon oxide.

19. The apparatus as set forth in Claim 18 wherein the first catalytic bed, the second catalytic bed, and the third catalytic bed are each positioned between screens of between 150 and 250 mesh.

20. The apparatus as set forth in Claim 18 wherein the blend of natural sodium zeolite and natural calcium zeolite in the second catalytic bed is between 25 and 75%.

21. The apparatus as set forth in Claim 18 wherein the first catalytic bed, the second catalytic bed, and the third catalytic bed are each provided on moving disks.

22. The apparatus as set forth in Claim 18 wherein the first catalytic bed, the second catalytic bed, and the third catalytic bed are each provided on moving disks such that the stack gases in element (d) can be continually passed through the first catalytic bed, the second catalytic bed, and the third catalytic bed to provide collection of solids and/or liquids while other portions or beds of like compositions are purged with nitrogen to collect the solids and/or liquids from the beds.

23. The apparatus as set forth in Claim 18 wherein the first catalytic bed, the second catalytic bed, and the third catalytic bed are adapted to be purged with liquid nitrogen to collect the solids and/or liquids from the beds.

24. The apparatus as set forth in Claim 18 wherein a fourth catalytic flow-through bed is provided in the exhaust below the first catalytic bed with a porosity of a total surface area not greater than 1200 m²/g adapted to collect bauxite compounds before passage through the first catalytic bed.

25. The apparatus as set forth in Claim 24 wherein the fourth catalytic flow-through bed is position on a moving disk so the stack gases are continuously moved there through while other portions of the same bed or like bed are purged with nitrogen.

26. The apparatus as set forth in Claim 25 wherein the nitrogen is liquid nitrogen.

27. The apparatus as set forth in Claim 18 wherein the first catalytic bed, the second catalytic bed, and the third catalytic bed each has a porosity of a total surface area not greater than 800 m²/g.

28. The apparatus as set forth in Claim 24 wherein the first catalytic bed, the second catalytic bed, the third catalytic bed, and the fourth catalytic bed each has a porosity of a total surface area not greater than 800 m²/g.

29. The apparatus as set forth in Claim 18 wherein the exhaust is adapted to exit gases from third catalytic bed having at least 95% reduction in sulfur oxides, nitrogen oxides, mercury oxide and carbon oxide compared to the stack gases delivered to the first catalytic flow-through bed.

30. The apparatus as set forth in Claim 24 wherein the stack is adapted to exit gases from third catalytic bed with at least 95% reduction in bauxite compounds, sulfur oxides, nitrogen oxides, mercury oxides, and carbon oxide from the stack gases delivered to the fourth catalytic flow-through bed.

31. The apparatus as set forth in Claim 18, wherein the natural calcium zeolite in the first catalytic bed comprises natural zeolite particles of a majority between 44 µm and 64 µm in size, and/or
wherein the blend of sodium zeolite and calcium zeolite in the second catalytic bed comprises natural sodium and calcium zeolite particles of a majority between 65 µm and 125 µm in size, and/or
wherein the calcium zeolite in the third bed comprises natural zeolite particles of a majority between 78 µm and 204 µm in size.

## Patentansprüche

1. Verfahren zum Reinigen von Rauchgasen, umfassend die Schritte:
(a) Bereitstellen in einem Schornstein, der für das Durchleiten von Rauchgasen geeignet ist, eines ersten katalytischen Durchflussbetts aus Calciumzeolith, umfassend natürliche Zeolithpartikel, deren Mehrheit eine Größe zwischen 44 µm und 64 µm aufweist, bei einer Temperatur oberhalb des Taupunkts zwischen 51,67 und 260 °C (zwischen 125 und 500 °F) und einem Druck zwischen 0,02 und 1,38 MPa (zwischen und 3 und 200 psi), das zum Reduzieren von Kohlenstoffoxiden in den Rauchgasen geeignet ist;
(b) Bereitstellen in dem Schornstein, der für das Durchleiten von Rauchgasen geeignet ist, in einer Position angrenzend an das erste katalytische Durchflussbett, eines zweiten katalytischen Durchflussbetts aus einer Mischung zwischen 25 und 75 % Natriumzeolith und Calciumzeolith, umfassend natürliche Natrium- und Calciumzeolithpartikel, deren Mehrheit eine Größe zwischen 65 µm und 125 µm aufweist, bei einer Temperatur oberhalb des Taupunkts zwischen 51,67 und 260 °C (zwischen 125 und 500 °F) und einem Druck zwischen 0,02 und 1,38 MPa (zwischen 3 und 200 psi), das zum Reduzieren von Stickoxiden in den Rauchgasen geeignet ist;
(c) Bereitstellen in dem Schornstein, der für das Durchleiten von Rauchgasen geeignet ist, in einer Position angrenzend an das zweite katalytische Durchflussbett, eines dritten katalytischen Durchflussbetts aus Calciumzeolith, umfassend natürliche Zeolithpartikel, deren Mehrheit eine Größe zwischen 78 µm und 204 µm aufweist, bei einer Temperatur oberhalb des Taupunkts zwischen 51,67 und 260 °C (zwischen 125 und 500 °F) und einem Druck zwischen 0,02 und 1,38 MPa (zwischen 3 und 200 psi), das zum Reduzieren von Stickoxiden in den Rauchgasen geeignet ist; und
(d) Leiten von Rauchgasen, ausgewählt aus der Gruppe bestehend aus flüchtigen Substanzen von der Verbrennung von Kohle oder von der Verbrennung von Erdgas oder von einem Zementofen, nacheinander durch das erste katalytische Bett, das zweite katalytische Bett und das dritte katalytische Bett, wobei jeweils Materialien in den katalytischen Betten gesammelt werden und Gas bereitgestellt wird, welches das dritte katalytische Bett mit einer wenigstens 70 %igen Reduktion von Schwefeloxiden, Stickoxiden und Kohlenoxid verlässt.

2. Verfahren wie in Anspruch 1 angegeben, außerdem umfassend den Schritt:
(e) Spülen von Feststoffen und Flüssigkeiten aus dem ersten katalytischen Bett, dem zweiten katalytischen Bett und dem dritten katalytischen Bett durch intermittierendes Leiten von Stickstoff durch die Betten, um Feststoffe und Flüssigkeiten zu entfernen, die durch die Betten aus den Rauchgasen gesammelt werden.

3. Verfahren wie in Anspruch 1 oder 2 angegeben, wobei das erste katalytische Bett, das zweite katalytische Bett und das dritte katalytische Bett auch wenigstens 50 % Quecksilber, vorzugsweise wenigstens 70 % Quecksilber, mehr bevorzugt wenigstens 90 % Quecksilber aus dem Rauchgas entfernen.

4. Verfahren wie in Anspruch 1 oder 2 angegeben, wobei das erste katalytische Bett, das zweite katalytische Bett und das dritte katalytische Bett jeweils zwischen Sieben von zwischen 150 und 250 mesh positioniert sind.

5. Verfahren wie in Anspruch 1 oder 2 angegeben, wobei das erste katalytische Bett, das zweite katalytische Bett und das dritte katalytische Bett jeweils auf einer sich bewegenden Scheibe bereitgestellt sind.

6. Verfahren wie in Anspruch 1 oder 2 angegeben, wobei wenigstens zwei Reihen von aufeinanderfolgenden Zirkulationen durch das erste katalytische Bett, das zweite katalytische Bett und das dritte katalytische Bett jeweils parallel bereitgestellt werden, so dass Rauchgas durch das Verfahren durch eine Reihe von Betten gereinigt werden kann, während die andere Reihe der Betten gereinigt werden kann.

7. Verfahren wie in Anspruch 1 oder 2 angegeben, wobei die Rauchgase, die das dritte katalytische Bett durch den Schornstein verlassen, eine wenigstens 95 %ige Reduktion von Schwefeloxiden, Stickoxiden und Kohlenoxid aufweisen im Vergleich zu den Rauchgasen, die dem ersten katalytischen Durchflussbett zugeführt werden.

8. Verfahren wie in Anspruch 1 oder 2 angegeben, umfassend zusätzlich ein viertes katalytisches Durchflussbett aus Calciumzeolith umfassend natürliche Zeolithpartikel, die eine Größe zwischen 44 µm und 64 µm aufweisen, das in dem Schornstein vor dem ersten katalytischen Bett positioniert ist, mit einer elektrischen Ladung auf dem vierten katalytischen Durchflussbett, um Bauxitverbindungen aus den Rauchgasen zu sammeln, bevor sie durch das erste katalytische Bett geleitet werden.

9. Verfahren wie in Anspruch 8 angegeben, wobei die Rauchgase, die das dritte katalytische Bett durch den Schornstein verlassen, eine wenigstens 95 %ige Reduktion von Bauxitverbindung, Schwefeloxiden, Stickoxiden und Kohlenoxid aufweisen im Vergleich zu den Rauchgasen, die durch den Schornstein dem vierten katalytischen Durchflussbett zugeführt werden.

10. Verfahren wie in Anspruch 1 oder 2 angegeben, wobei das erste katalytische Bett, das zweite katalytische Bett und das dritte katalytische Bett jeweils eine Porosität mit einer Gesamtoberfläche von nicht mehr als 1200 m²/g, vorzugsweise nicht mehr als 800 m²/g aufweist.

11. Verfahren wie in Anspruch 8 angegeben, wobei das erste katalytische Bett, das zweite katalytische Bett, das dritte katalytische Bett und das vierte katalytische Bett jeweils eine Porosität mit einer Gesamtoberfläche von nicht mehr als 1200 m²/g, vorzugsweise nicht mehr 800 m²/g aufweist.

12. Verfahren wie in Anspruch 1 oder 2 angegeben, wobei der Schornstein geeignet ist, Rauchgase mit weniger als 7 % Sauerstoff durchzuleiten.

13. Verfahren wie in Anspruch 2 angegeben, wobei das erste katalytische Bett, das zweite katalytische Bett und das dritte katalytische Bett mit flüssigem Stickstoff gespült werden, um die Feststoffe und Flüssigkeiten zu entfernen, die durch die Betten aus Rauchgas gesammelt werden.

14. Verfahren wie in Anspruch 2 angegeben, wobei das erste katalytische Bett, das zweite katalytische Bett und das dritte katalytische Bett jeweils auf einer sich bewegenden Scheibe bereitgestellt sind, so dass die Rauchgase in Schritt (d) kontinuierlich durch das erste katalytische Bett, das zweite katalytische Bett und das dritte katalytische Bett geleitet werden können, um eine Sammlung von Feststoffen und/oder Flüssigkeiten aus den Rauchgasen bereitzustellen, während andere Teile des gleichen Betts oder ähnlicher Betten mit Stickstoff gespült werden, um die Feststoffe und Flüssigkeiten zu entfernen, die durch die Betten aus dem Rauchgas gesammelt werden.

15. Verfahren wie in Anspruch 8 angegeben, wobei das vierte katalytische Durchflussbett sich auf einer rotierenden Scheibe befindet, so dass die Rauchgase kontinuierlich durch das vierte Bett bewegt werden, während andere Teile des gleichen Betts oder ähnlichen Betts mit Stickstoff gespült werden, um Feststoffe und Flüssigkeiten zu entfernen, die durch das vierte Bett aus dem Rauchgas gesammelt werden.

16. Verfahren wie in Anspruch 14 oder 15 angegeben, wobei der Stickstoff flüssiger Stickstoff ist.

17. Verfahren wie in Anspruch 1 oder 2 angegeben, außerdem umfassend den Schritt des Herstellens eines Düngemittelprodukts.

18. Vorrichtung zum Reinigen von Rauchgasen umfassend:
(a) ein erstes katalytisches Durchflussbett aus natürlichem Calciumzeolith mit einer Porosität mit einer Gesamtoberfläche von nicht mehr als 1200 m²/g, das zum Reduzieren von Schwefeloxiden geeignet ist, positioniert in einem Abgasschornstein;
(b) ein zweites katalytisches Durchflussbett aus einer Mischung aus natürlichem Natriumzeolith und natürlichem Calciumzeolith mit einer Porosität mit einer Gesamtoberfläche von nicht mehr als 1200 m²/g, das zum Reduzieren von Stickoxiden geeignet ist, positioniert in dem Abgasschornstein über dem ersten Bett;
(c) ein drittes katalytisches Durchflussbett aus natürlichem Calciumzeolith mit einer Porosität mit einer Gesamtoberfläche von nicht mehr als 1200 m²/g, das zum Reduzieren von Kohlenoxiden und Quecksilberoxiden geeignet ist, positioniert in dem Abgasschornstein über dem zweiten Bett; und
(d) der Abgasschornstein, der geeignet ist, einen Gasstrom bereitzustellen, ausgewählt aus der Gruppe bestehend aus flüchtigen Substanzen von der Verbrennung von Kohle oder der Verbrennung von Erdgas, nacheinander durch das erste katalytische Bett, das zweite katalytische Bett und das dritte katalytische Bett, die jeweils Feststoffe in den katalytischen Betten sammeln und Gas bereitstellen, welches das dritte katalytische Bett mit einer wenigstens 70 %igen Reduktion von Schwefeloxiden, Stickoxiden und Kohlenoxid verlässt.

19. Vorrichtung wie in Anspruch 18 angegeben, wobei das erste katalytische Bett, das zweite katalytische Bett und das dritte katalytische Bett jeweils zwischen Sieben von zwischen 150 und 250 mesh positioniert sind.

20. Vorrichtung wie in Anspruch 18 angegeben, wobei die Mischung aus natürlichem Natriumzeolith und natürlichem Calciumzeolith in dem zweiten katalytischen Bett zwischen 25 und 75 % beträgt.

21. Vorrichtung wie in Anspruch 18 angegeben, wobei das erste katalytische Bett, das zweite katalytische Bett und das dritte katalytische Bett jeweils auf sich bewegenden Scheiben bereitgestellt sind.

22. Vorrichtung wie in Anspruch 18 angegeben, wobei das erste katalytische Bett, das zweite katalytische Bett und das dritte katalytische Bett jeweils auf sich bewegenden Scheiben bereitgestellt sind, so dass die Rauchgase in Element (d) kontinuierlich durch das erste katalytische Bett, das zweite katalytische Bett und das dritte katalytische Bett geleitet werden können, um eine Sammlung von Feststoffen und/oder Flüssigkeiten bereitzustellen, während andere Teile oder Betten mit ähnlichen Zusammensetzungen mit Stickstoff gespült werden, um die Feststoffe und/oder Flüssigkeiten von den Betten zu sammeln.

23. Vorrichtung wie in Anspruch 18 angegeben, wobei das erste katalytische Bett, das zweite katalytische Bett und das dritte katalytische Bett geeignet sind, mit flüssigem Stickstoff gespült zu werden, um die Feststoffe und/oder Flüssigkeiten von den Betten zu sammeln.

24. Vorrichtung wie in Anspruch 18 angegeben, wobei ein viertes katalytisches Durchflussbett in dem Abgaskanal unter dem ersten katalytischen Bett mit einer Porosität mit einer Gesamtoberfläche von nicht mehr als 1200 m²/g bereitgestellt ist, das dafür geeignet ist, Bauxitverbindungen vor dem Durchfluss durch das erste katalytische Bett zu sammeln.

25. Vorrichtung wie in Anspruch 24 angegeben, wobei das vierte katalytische Durchflussbett auf einer sich bewegenden Scheibe positioniert ist, so dass die Rauchgase kontinuierlich hindurchbewegt werden, während andere Teile des gleichen Betts oder ähnlichen Betts mit Stickstoff gespült werden.

26. Vorrichtung wie in Anspruch 25 angegeben, wobei der Stickstoff flüssiger Stickstoff ist.

27. Vorrichtung wie in Anspruch 18 angegeben, wobei das erste katalytische Bett, das zweite katalytische Bett und das dritte katalytische Bett jeweils eine Porosität mit einer Gesamtoberfläche von nicht mehr als 800 m²/g aufweist.

28. Vorrichtung wie in Anspruch 24 angegeben, wobei das erste katalytische Bett, das zweite katalytische Bett, das dritte katalytische Bett und das vierte katalytische Bett jeweils eine Porosität mit einer Gesamtoberfläche von nicht mehr als 800 m²/g aufweist.

29. Vorrichtung wie in Anspruch 18 angegeben, wobei der Abgaskanal dafür geeignet ist, Gase mit einer wenigstens 95 %igen Reduktion von Schwefeloxiden, Stickoxiden, Quecksilberoxiden und Kohlenoxid im Vergleich zu den Rauchgasen, die dem ersten katalytischen Durchflussbett zugeführt werden, aus dem dritten katalytischen Bett austreten zu lassen.

30. Vorrichtung wie in Anspruch 24 angegeben, wobei der Schornstein dafür geeignet ist, Gase mit einer wenigstens 95 %igen Reduktion von Bauxitverbindungen, Schwefeloxiden, Stickoxiden, Quecksilberoxiden und Kohlenoxid aus den Rauchgasen, die dem vierten katalytischen Durchflussbett zugeführt werden, aus dem dritten katalytischen Bett austreten zu lassen.

31. Vorrichtung wie in Anspruch 18 angegeben, wobei der natürliche Calciumzeolith in dem ersten katalytischen Bett natürliche Zeolithpartikel, deren Mehrheit eine Größe zwischen 44 und 64 µm aufweist, umfasst, und/oder
wobei die Mischung von Natriumzeolith und Calciumzeolith in dem zweiten katalytischen Bett natürliche Natrium- und Calciumzeolithpartikel, deren Mehrheit eine Größe zwischen 65 µm und 125 µm aufweist, umfasst, und/oder
wobei der Calciumzeolith in dem dritten Bett natürliche Zeolithpartikel, deren Mehrheit eine Größe zwischen 78 µm und 204 µm aufweist, umfasst.

## Revendications

1. Procédé de nettoyage des gaz de cheminée, comprenant les étapes consistant à:
(a) fournir dans une cheminée prévue pour laisser passer les gaz de de cheminée à travers un premier lit fluidisé catalytique de zéolite de calcium comprenant des particules de zéolite naturelle de taille comprise en majorité entre 44 µm et 64 µm, à une température supérieure au point de rosée comprise entre 51,67 et 260°C (entre 125 et 500°F) et une pression comprise entre 0,02 et 1,38 MPa (entre 3 et 200 psi) prévue pour réduire les oxydes de carbone dans les gaz de cheminée;
(b) fournir dans la cheminée prévue pour laisser passer les gaz de cheminée adjacents au premier lit fluidisé catalytique, un deuxième lit fluidisé catalytique composé d'un mélange contenant 25 à 75% de zéolite de calcium comprenant des particules de zéolite naturelle de taille comprise en majorité entre 65 µm et 125 µm, à une température supérieure au point de rosée comprise entre 51,67 et 260°C (entre 125 et 500°F) et une pression comprise entre 0,02 et 1,38 MPa (entre 3 et 200 psi) prévue pour réduire les oxydes d'azote dans les gaz de cheminée;
(c) fournir dans la cheminée prévue pour laisser passer les gaz de cheminée adjacents au deuxième lit fluidisé catalytique, un troisième lit fluidisé catalytique de zéolite de calcium comprenant des particules de zéolite naturelle de taille comprise en majorité entre 78 µm et 204 µm, à une température supérieure au point de rosée comprise entre 51,67 et 260°C (entre 125 et 500°F) et une pression comprise entre 0,02 et 1,38 MPa (entre 3 et 200 psi) prévue pour réduire les oxydes de soufre dans les gaz de cheminée; et
(d) laisser passer des gaz de cheminée choisi dans le groupe consistant en substances volatiles provenant de la combustion du charbon ou de la combustion du gaz naturel ou d'un four à ciment de manière séquentielle à travers le premier lit catalytique, le deuxième lit catalytique et le troisième lit catalytique, chacun récupérant des matériaux dans les lits catalytiques et fournir le gaz sortant du troisième lit catalytique avec une réduction d'au moins 70% des oxydes de soufre, des oxydes d'azote et de l'oxyde de carbone.

2. Procédé selon la revendication 1, comprenant en outre les étapes consistant à:
(e) purger les solides et les liquides du premier lit catalytique, du deuxième lit catalytique et du troisième lit catalytique en faisant passer de façon intermittente l'azote à travers les lits pour éliminer les solides et les liquides récupérés par les lis catalytiques à partir des gaz de cheminée.

3. Procédé selon la revendication 1 ou la revendication 2, dans lequel le premier lit catalytique, le deuxième lit catalytique et le troisième lit catalytique retirent également du gaz de cheminée au moins 50% de mercure, de préférence au moins 70% de mercure, plus préférablement au moins 90% de mercure.

4. Procédé selon la revendication 1 ou la revendication 2, dans lequel le premier lit catalytique, le deuxième lit catalytique et le troisième lit catalytique sont chacun positionnés entre des tamis d'un maillage compris entre 150 et 250.

5. Procédé selon la revendication 1 ou la revendication 2, dans lequel le premier lit catalytique, le deuxième lit catalytique et le troisième lit catalytique sont chacun prévus sur un disque mobile.

6. Procédé selon la revendication 1 ou la revendication 2, dans lequel au moins deux séries de circulations séquentielles à travers le premier lit catalytique, le deuxième lit catalytique et le troisième lit catalytique sont prévues en parallèle, de sorte que le gaz peut être nettoyé selon le procédé à travers une série de lits tandis que d'autres séries de lits peuvent être nettoyées.

7. Procédé selon la revendication 1 ou la revendication 2, dans lequel les gaz de cheminée sortent du troisième lit catalytique à travers la cheminée présentent une réduction d'au moins 95% des oxydes de soufre, des oxydes d'azote et d'oxyde de carbone par rapport aux gaz de cheminée délivrés au premier lit fluidisé catalytique.

8. Procédé selon la revendication 1 ou la revendication 2, comprenant en outre un quatrième lit fluidisé catalytique de zéolite de calcium comprenant des particules de zéolite naturelle de taille comprise entre 44 µm et 64 µm situées dans la cheminée avant le premier lit catalytique avec une charge électrique sur ledit quatrième lit fluidisé catalytique afin de récupérer les composés de bauxite provenant des gaz de cheminée avant de passer à travers le premier lit catalytique.

9. Procédé selon la revendication 8, dans lequel les gaz de cheminée sortant du troisième lit catalytique à travers la cheminée présentent une réduction d'au moins 95% du composé de bauxite, des oxydes de soufre, des oxydes d'azote et d'oxyde de carbone par rapport aux gaz de cheminée délivrés au quatrième lit fluidisé catalytique à travers la cheminée.

10. Procédé selon la revendication 1 ou la revendication 2, dans lequel le premier lit catalytique, le deuxième lit catalytique et le troisième lit catalytique ont chacun une porosité d'une superficie totale inférieure ou égale à 1200 m²/g, de préférence inférieure ou égale à 800 m²/g.

11. Procédé selon la revendication 8, dans lequel le premier lit catalytique, le deuxième lit catalytique, le troisième lit catalytique et le quatrième lit catalytique ont chacun une porosité d'une superficie totale inférieure ou égale à 1200 m²/g, de préférence inférieure ou égale à 800 m²/g.

12. Procédé selon la revendication 1 ou la revendication 2, dans lequel la cheminée est prévue pour laisser passer des gaz de cheminée contenant moins de 7% d'oxygène.

13. Procédé selon la revendication 2, dans lequel le premier lit catalytique, le deuxième lit catalytique et le troisième lit catalytique sont purgés avec de l'azote liquide pour éliminer les solides et les liquides récupérés par les lits catalytiques à partir des gaz de cheminée.

14. Procédé selon la revendication 2, dans lequel le premier lit catalytique, le deuxième lit catalytique et le troisième lit catalytique sont chacun prévus sur un disque mobile de telle sorte que les gaz de cheminée dans l'étape (d) peuvent traverser en continu le premier lit catalytique, le deuxième lit catalytique et le troisième lit catalytique pour récupérer les solides et/ou les liquides provenant des gaz de cheminée tandis que d'autres parties du même lit ou de lits similaires sont purgées avec de l'azote pour éliminer des lits catalytiques les solides et les liquides provenant du gaz de cheminée.

15. Procédé selon la revendication 8, dans lequel le quatrième lit fluidisé catalytique est prévu sur un disque rotatif afin que les gaz de cheminée soient continuellement en mouvement à travers le quatrième lit alors que d'autres parties du même lit ou d'un lit similaire sont purgées avec de l'azote pour éliminer les solides et les liquides récupérés par le quatrième lit à partir du gaz de cheminée.

16. Procédé selon la revendication 14 ou la revendication 15, dans lequel l'azote est de l'azote liquide.

17. Procédé selon la revendication 1 ou la revendication 2, comprenant en outre l'étape de fabrication d'un engrais.

18. Appareil pour nettoyer les gaz de cheminée comprenant:
(a) un premier lit fluidisé catalytique de zéolite de calcium naturelle avec une porosité d'une superficie totale inférieure ou égale à 1200 m²/g, prévu pour réduire les oxydes de soufre se trouvant dans une cheminée d'échappement;
(b) un deuxième lit fluidisé catalytique composé d'un mélange de zéolite de sodium naturelle et de zéolite de calcium naturelle d'une porosité dont la superficie totale inférieure ou égale à 1200 m²/g, afin de réduire les oxydes d'azote se trouvant dans la pile d'échappement au-dessus du premier lit;
(c) un troisième lit fluidisé catalytique de zéolite de calcium naturelle avec une porosité d'une superficie totale inférieure ou égale à 1200 m²/g, prévu pour réduire les oxydes de carbone et les oxydes de mercure se trouvant dans une cheminée d'échappement au-dessus du deuxième lit; et
(d) la cheminée d'échappement prévue pour assurer un écoulement de gaz choisi dans le groupe consistant en substances volatiles provenant de la combustion du charbon ou de la combustion du gaz naturel ou d'un four à ciment de manière séquentielle à travers le premier lit catalytique, le deuxième lit catalytique et le troisième lit catalytique, chacun récupérant des solides dans les lits catalytiques et fournir le gaz sortant du troisième lit catalytique avec une réduction d'au moins 70% des oxydes de soufre, des oxydes d'azote et de l'oxyde de carbone.

19. Appareil selon la revendication 18, dans lequel le premier lit catalytique, le deuxième lit catalytique et le troisième lit catalytique sont chacun positionnés entre des tamis d'un maillage compris entre 150 et 250.

20. Appareil selon la revendication 18, dans lequel le mélange de zéolite de sodium naturelle et de zéolite de calcium naturelle dans le deuxième lit catalytique est compris entre 25 et 75%.

21. Appareil selon la revendication 18, dans lequel le premier lit catalytique, le deuxième lit catalytique et le troisième lit catalytique sont chacun prévus sur des disques mobiles.

22. Appareil selon la revendication 18, dans lequel le premier lit catalytique, le deuxième lit catalytique et le troisième lit catalytique sont chacun prévus sur des disques mobiles de telle sorte que les gaz de cheminée dans l'étape (d) peuvent traverser en continu le premier lit catalytique, le deuxième lit catalytique et le troisième lit catalytique pour récupérer les solides et/ou les liquides provenant des gaz de cheminée tandis que d'autres parties ou d'autres lits de compositions similaires sont purgés avec de l'azote pour éliminer des lits catalytiques les solides et les liquides.

23. Appareil selon la revendication 18, dans lequel le premier lit catalytique, le deuxième lit catalytique et le troisième lit catalytique sont purgés avec de l'azote liquide pour éliminer les solides et les liquides récupérés par les lits catalytiques.

24. Appareil selon la revendication 18, dans lequel un quatrième lit fluidisé catalytique est prévu dans l'échappement au-dessous du premier lit catalytique avec une porosité d'une superficie totale inférieure ou égale à 1200 m²/g prévue pour récupérer les composés de bauxite avant de passer à travers le premier lit catalytique.

25. Procédé selon la revendication 24, dans lequel le quatrième lit fluidisé catalytique est prévu sur un disque mobile afin que les gaz de cheminée y soient continuellement en mouvement alors que d'autres parties du même lit ou d'un lit similaire sont purgées avec de l'azote.

26. Appareil selon la revendication 25, dans lequel l'azote est de l'azote liquide.

27. Appareil selon la revendication 8, dans lequel le premier lit catalytique, le deuxième lit catalytique et le troisième lit catalytique ont chacun une porosité d'une superficie totale inférieure ou égale à 800 m²/g.

28. Appareil selon la revendication 24, dans lequel le premier lit catalytique, le deuxième lit catalytique, le troisième lit catalytique et le quatrième lit catalytique ont chacun une porosité d'une superficie totale inférieure ou égale à 800 m²/g.

29. Appareil selon la revendication 18, dans lequel l'échappement est prévu pour que les gaz de cheminée sortant du troisième lit catalytique présentent une réduction d'au moins 95% des oxydes de soufre, des oxydes d'azote et d'oxyde de carbone par rapport aux gaz de cheminée délivrés au premier lit fluidisé catalytique.

30. Appareil selon la revendication 24, dans lequel la cheminée est prévue pour laisser passer des gaz de cheminée sortant du troisième lit catalytique présentant une réduction d'au moins 95% des oxydes de soufre, des oxydes d'azote et d'oxyde de carbone par rapport aux gaz de cheminée délivrés au quatrième lit fluidisé catalytique.

31. Appareil selon la revendication 18, dans lequel la zéolite de calcium naturelle dans le premier lit catalytique comprend des particules de zéolite naturelle de taille en majorité comprise entre 44 µm et 64 µm et/ou
dans lequel le mélange de zéolite de sodium et de zéolite de calcium dans le deuxième lit catalytique comprend des particules de zéolite de sodium et de calcium naturelles de taille en majorité comprise entre 65 µm et 125 µm et/ou
dans lequel la zéolite de calcium dans le troisième lit catalytique comprend des particules de zéolite naturelle de taille en majorité comprise entre 78 µm et 204 µm.
